# EUROPEAN PATENT APPLICATION

(11) **EP 4 624 549 A1**
(43) Date of publication of application: **01.10.2025**
(21) Application number: 23894620.6
(22) Date of filing: 22.11.2023
(51) Int. Cl.: C09K 3/18, C08F 214/04, C08F 214/06, C08F 214/08, C08F 220/12, C09D 133/06, D06M 15/248, D06M 15/263

(54) **WATER-REPELLING AGENT COMPOSITION, METHOD FOR PRODUCING NON-FLUORINATED POLYMER, TREATMENT METHOD, AND ARTICLE**

(30) Priority: 22.11.2022 JP 2022186729
(71) Applicant: AGC INC., Chiyoda-ku, Tokyo 1008405 (JP)
(72) Inventor: ONISHI Shunsuke, Tokyo 100-8405 (JP); SHIOTA Yukiko, Tokyo 100-8405 (JP); KAMIJO Yuzuka, Tokyo 100-8405 (JP); YAMASAKI Ryujiro, Tokyo 100-8405 (JP); SUGIYAMA Kazunori, Tokyo 100-8405 (JP)
(74) Representative: Müller-Boré & Partner Patentanwälte PartG mbB
(86) International application number: PCT/JP2023/041935
(87) International publication number: WO 2024/111616

(57) **Abstract**

The present invention pertains to a water repellent composition containing a non-fluorinated polymer having a structural unit based on a long-chain alkyl (meth)acrylate monomer, a structural unit based on a vinyl halide monomer, and a structural unit based on a (meth)acrylate monomer having a polysiloxane structure, wherein a molecular weight of the (meth)acrylate monomer having a polysiloxane structure is from 1,000 to 3,600, and a ratio of the structural unit based on the vinyl halide monomer with respect to a total amount of structural units of the non-fluorinated polymer is from 1 to 12% by mass.

## Description

### TECHNICAL FIELD

The present invention relates to a water repellent composition, a method for producing a non-fluorinated polymer, a treatment method, and an article.

Priority is claimed on Japanese Patent Application No. 2022-186729, filed November 22, 2022, the content of which is incorporated herein by reference.

### BACKGROUND ART

As a method of imparting water repellency to the surface of an article such as a textile product, a method of treating the article using a water repellent composition containing a fluoropolymer has been known. However, the fluoropolymer used in the above method is of concern in terms of high environmental impact. Accordingly, there is a demand for a water repellent composition containing a non-fluorinated polymer that can impart sufficient water repellency to the surface of an article and has a low environmental impact.

As a water repellent composition containing a non-fluorinated polymer, for example, Patent Document 1 discloses a water repellent composition containing a non-fluorinated copolymer characterized by having a structural unit based on a (meth)acrylate monomer (A) that does not have a polyfluoroalkyl group and has an alkyl group of 20 to 30 carbon atoms, and a structural unit based on a halogenated olefin monomer (B), in which a ratio of the structural unit based on the aforementioned monomer (A) is from 5 to 95% by mass of all structural units (100% by mass), a ratio of the structural unit based on the aforementioned monomer (B) is from 5 to 60% by mass of all structural units (100% by mass), and the total content of the structural unit based on the aforementioned monomer (A) and the structural unit based on the aforementioned monomer (B) is 65% by mass or more of all structural units (100% by mass).

### Citation List

### Patent Document

Patent Document 1: International Patent Publication No. 2009/113589

### SUMMARY OF INVENTION

### Technical Problem

When the content of non-fluorinated polymer in the water repellent composition is low, favorable water repellency may not be exhibited. In addition, when an article that has been subjected to a water repellent treatment is used for a long period of time, a problem of durability may occur in which the water repellency decreases. When the content of non-fluorinated polymer is low, the water repellency and durability of the water repellent composition described in Patent Document 1 are insufficient. Therefore, there is a demand for a water repellent composition containing a non-fluorinated copolymer that can achieve sufficient water repellency and durability even when the content of non-fluorinated polymer in the water repellent composition is low.

The present invention has an object of providing: a water repellent composition from which an article with better water repellency can be obtained; a method for producing a non-fluorinated polymer; a treatment method using the aforementioned water repellent composition; and an article with excellent water repellency that has been treated using the aforementioned water repellent composition.

### Solution to Problem

The present invention includes the following aspects.
[1] A water repellent composition containing a non-fluorinated polymer having a structural unit based on a long-chain alkyl (meth)acrylate monomer, a structural unit based on a vinyl halide monomer, and a structural unit based on a (meth)acrylate monomer having a polysiloxane structure, wherein a molecular weight of the aforementioned (meth)acrylate monomer having a polysiloxane structure is from 1,000 to 3,600, from 1,200 to 3,500, or from 1,500 to 3,300, and a ratio of the structural unit based on the vinyl halide monomer with respect to a total amount of structural units of the aforementioned non-fluorinated polymer is from 1 to 12% by mass, from 2 to 11% by mass, or from 3 to 10% by mass.
[2] The water repellent composition according to [1], wherein a total ratio of the aforementioned structural unit based on a long-chain alkyl (meth)acrylate monomer, the aforementioned structural unit based on a vinyl halide monomer, and the aforementioned structural unit based on a (meth)acrylate monomer having a polysiloxane structure with respect to a total amount of structural units of the aforementioned non-fluorinated polymer is 80% by mass or more, from 80 to 99% by mass, or from 82 to 98% by mass.
[3] The water repellent composition according to [1] or [2], wherein the aforementioned vinyl halide monomer is vinyl chloride or vinylidene chloride.
[4] The water repellent composition according to any one of [1] to [3], wherein the aforementioned (meth)acrylate monomer having a polysiloxane structure is represented by the following formula (1) or the following formula (2).

   R¹-(Si(R²)₂O)ₘ-Si(R²)₂-R³OC(=O)CR⁴=CH₂ (1)

   In the above formula (1), R¹ represents a monovalent hydrocarbon group having 1 to 12, 1 to 10, 1 to 8, or 1 to 6 carbon atoms; R² represents H or CH₃, and preferably CH₃; R³ represents a divalent hydrocarbon group having 1 to 6, 1 to 4, or 1 to 3 carbon atoms; R⁴ represents H, CH₃, or a chlorine atom, preferably H or CH₃, and more preferably CH₃; m represents an integer of 8 to 55, an integer of 10 to 45, an integer of 12 to 43, or an integer of 16 to 40; and a plurality of R² groups may be the same or different, and preferably the same.

   CH₂=CR⁵C(=O)OR⁶-(Si(R⁷)₂O)ₙ-Si(R⁷)₂-R⁶OC(=O)CR⁵=CH₂ (2)

   In the above formula (2), R⁵ represents H, CH₃ or a chlorine atom, preferably H or CH₃, and more preferably CH₃; R⁶ represents a divalent hydrocarbon group having 1 to 6, 1 to 4 or 1 to 3 carbon atoms; R⁷ represents H or CH₃, and preferably CH₃; n represents an integer of 8 to 55, an integer of 10 to 45, an integer of 12 to 43 or an integer of 16 to 40; a plurality of R⁵ groups may be the same or different, and preferably the same; a plurality of R⁶ groups may be the same or different, and preferably the same; and a plurality of R⁷ groups may be the same or different, and preferably the same.
[5] The water repellent composition according to any one of [1] to [4], wherein the aforementioned long-chain alkyl (meth)acrylate monomer is represented by the following formula (3).

   R⁹-OC(=O)CR⁸=CH₂ (3)

   In the above formula (3), R⁸ represents H, CH₃ or a chlorine atom, preferably H or CH₃, and more preferably H; and R⁹ represents an alkyl group having 12 to 30, 14 to 28, or 16 to 24 carbon atoms.
[6] The water repellent composition according to [5], wherein the aforementioned structural unit based on a long-chain alkyl (meth)acrylate monomer includes a structural unit based on a long-chain alkyl (meth)acrylate monomer in which R⁹ in the above formula (3) has 12 to 18, 16 to 18, or 18 carbon atoms, and a structural unit based on a long-chain alkyl (meth)acrylate monomer in which R⁹ in the above formula (3) has 19 to 30, 20 to 28, or 20 to 24 carbon atoms.
[7] The water repellent composition according to [6], wherein a total ratio of the structural unit based on a long-chain alkyl (meth)acrylate monomer in which R⁹ in the above formula (3) has 19 to 30, 20 to 28, or 20 to 24 carbon atoms with respect to a total amount of the aforementioned structural unit based on a long-chain alkyl (meth)acrylate monomer is from 50 to 99% by mass, from 55 to 99% by mass, from 60 to 95% by mass, or from 62 to 90% by mass.
[8] The water repellent composition according to any one of [1] to [7], wherein the aforementioned non-fluorinated polymer further includes a structural unit based on a crosslinkable monomer, and a ratio of the structural unit based on the crosslinkable monomer with respect to a total amount of the structural unit units of the aforementioned non-fluorinated polymer is preferably from 0.1 to 15% by mass, more preferably from 0.2 to 10% by mass, and still more preferably from 0.5 to 6% by mass.
[9] A method for producing a non-fluorinated polymer, the method including polymerizing a mixture containing a long-chain alkyl (meth)acrylate monomer, a vinyl halide monomer, and a (meth)acrylate monomer having a polysiloxane structure in the presence of a surfactant and a polymerization initiator, wherein a ratio of the aforementioned long-chain alkyl (meth)acrylate monomer is from 73 to 95% by mass, from 74 to 92% by mass, or from 75 to 90% by mass, a ratio of the aforementioned vinyl halide monomer is from 1 to 12% by mass, from 2 to 11% by mass, or from 3 to 10% by mass, and a ratio of the aforementioned (meth)acrylate monomer having a polysiloxane structure is from 0.5 to 15% by mass, from 0.8 to 14% by mass, or from 1 to 13% by mass, with respect to a total mass of all monomers constituting the aforementioned non-fluorinated polymer.
[10] A treatment method using the water repellent composition according to any one of [1] to [8].
[11] An article treated using the water repellent composition according to any one of [1] to [8].

### Advantageous Effects of Invention

According to the present invention, it is possible to provide: a water repellent composition from which an article with better water repellency can be obtained; a method for producing a non-fluorinated polymer; a treatment method using the aforementioned water repellent composition; and an article with excellent water repellency that has been treated using the aforementioned water repellent composition.

### DESCRIPTION OF EMBODIMENTS

The meanings and definitions of terms in the present specification are as follows.

A "non-fluorinated polymer" is a generic term for a polymer having a fluorine atom content of 0.1% by mass or less with respect to the total mass of the polymer. The fluorine atom content with respect to the total mass of the polymer can be measured by combustion ion chromatography or the like.

A "structural unit based on a monomer" is a generic term for an atomic group directly formed by polymerization of a single monomer molecule and an atomic group obtained by chemical conversion of a portion of this directly formed atomic group.

A "(meth)acrylate" is a generic term for an acrylate, a methacrylate, and a compound obtained by substituting a methyl group in a methacryloyl group of the methacrylate with a chlorine atom. Similarly, a "(meth)acryloyl group" is a generic term for an acryloyl group, a methacryloyl group, and a group obtained by substituting a methyl group in a methacryloyl group with a chlorine atom.

A "long-chain alkyl" refers to an alkyl group having 12 or more carbon atoms.

A "vinyl halide" is a compound in which at least one hydrogen atom in ethylene is replaced with a halogen atom.

The expression "having a polysiloxane structure" means that the polymer has a repeating unit represented by "-(Si(R)₂O)ₓ₁-". R represents H or CH₃, and x1 is an integer of 5 or more. A plurality of R groups may be the same or different.

The molecular weight of a (meth)acrylate monomer having a polysiloxane structure can be calculated from the measurement results of the (meth)acryloyl group equivalent (the number of methacryloyl group molecules per unit mass). When the structure of the (meth)acrylate monomer having a polysiloxane structure is already known, it is the formula weight.

The number average molecular weight (hereinafter also referred to as "Mn") and weight average molecular weight (hereinafter also referred to as "Mw") of a polymer are polystyrene equivalent molecular weights obtained through measurement by gel permeation chromatography (hereinafter also referred to as "GPC") using a calibration curve produced using a standard polystyrene sample.

A solid content concentration is calculated by a formula: (solid content mass) / (sample mass) × 100 by taking the mass of a sample before heating as the sample mass, and the mass of the sample after drying for 4 hours in a convective dryer at 120°C as the solid content mass.

A symbol "-" indicating a numerical range means that numerical values described before and after this symbol are included as the lower limit value and the upper limit value.

### <<Water repellent composition>>

A water repellent composition of the present embodiment (hereinafter also referred to as "the present composition") contains a specific polymer (hereinafter also referred to as a "polymer (A)"). The polymer (A) is a non-fluorinated polymer having a structural unit based on a long-chain alkyl (meth)acrylate monomer (hereinafter also referred to as a "monomer (a)"), a structural unit based on a vinyl halide monomer (hereinafter also referred to as a "monomer (b)"), and a structural unit based on a (meth)acrylate monomer having a polysiloxane structure with a molecular weight of 1,000 to 3,600 (hereinafter also referred to as a "monomer (c)"). A ratio of the structural unit based on the monomer (b) with respect to the total amount of structural units of the polymer (A) is from 1 to 12% by mass. The polymer (A) may contain either one or both of a structural unit based on a monomer (d) and a structural unit based on a monomer (e) described below.

The present composition may contain the polymer (A) and a medium.

The present composition may contain one or more selected from the group consisting of a surfactant, a molecular weight modifier, and a polymerization initiator.

The present composition may contain other components, if necessary.

The present composition is preferably a non-fluorinated polymer solution containing the polymer (A). The non-fluorinated polymer solution also includes a dispersion liquid obtained by the production method described below, and a dispersion liquid obtained by further dilution with an arbitrary medium for treating an article.

The present composition may be a non-fluorinated polymer solution containing the polymer (A) and an organic solvent as a medium, and containing no surfactant.

### <Polymer (A)>

The polymer (A) has a unit based on the monomer (a) (hereinafter also referred to as a "unit (a)"), a unit based on the monomer (b) (hereinafter also referred to as a "unit (b)"), and a unit based on the monomer (c) (hereinafter also referred to as a "unit (c)").

The polymer (A) may further have either one or both of a unit based on the monomer (d) (hereinafter also referred to as a "unit (d)") and a unit based on the monomer (e) (hereinafter also referred to as a "unit (e)"), as necessary.

### (Monomer (a))

The monomer (a) is a long-chain alkyl (meth)acrylate monomer. The long-chain alkyl (meth)acrylate is a monomer having an alkyl group with 12 or more carbon atoms and one (meth)acryloyl group in one molecule.

As the monomer (a), a long-chain alkyl (meth)acrylate monomer represented by the following formula (3) is preferred.

R⁹-OC(=O)CR⁸=CH₂ (3)

In the above formula (3), R⁸ represents H, CH₃ or a chlorine atom, and R⁹ represents an alkyl group having 12 to 30 carbon atoms.

R⁸ is preferably H or CH₃, and more preferably H.

The long-chain alkyl group may be linear or branched, and preferably linear.

R⁹ preferably has 12 to 30 carbon atoms, more preferably 14 to 28 carbon atoms, and still more preferably 16 to 24 carbon atoms. When the number of carbon atoms is equal to or more than the above lower limit value, the water repellency is excellent. When the number of carbon atoms is equal to or less than the above upper limit value, the availability and handling properties are excellent.

As the monomer (a), lauryl (meth)acrylate, cetyl (meth)acrylate, stearyl (meth)acrylate, and behenyl (meth)acrylate are preferred.

Further, two or more types of monomers (a) may be used in combination. As the monomer (a), it is particularly preferable to use a long-chain alkyl (meth)acrylate monomer in which R⁹ in the above formula (3) has 12 to 18 carbon atoms (hereinafter also referred to as a "monomer (a1)") and a long-chain alkyl (meth)acrylate monomer in which R⁹ in the above formula (3) has 19 to 30 carbon atoms (hereinafter also referred to as a "monomer (a2)") in combination.

The monomer (a1) may be a mixture of any two or more of the long-chain alkyl (meth)acrylate monomers in which R⁹ in the above formula (3) has 12 to 18 carbon atoms. The monomer (a2) may be a mixture of any two or more of the long-chain alkyl (meth)acrylate monomers in which R⁹ in the above formula (3) has 19 to 30 carbon atoms.

The number of carbon atoms in the alkyl group of the monomer (a1) is from 12 to 18, preferably from 16 to 18, and more preferably 18. When the number of carbon atoms is equal to or more than the above lower limit value, the water repellency is excellent. When the number of carbon atoms is equal to or less than the above upper limit value, the availability and handling properties are excellent.

The number of carbon atoms in the alkyl group of the monomer (a2) is from 19 to 30, preferably from 20 to 28, and more preferably from 20 to 24. When the number of carbon atoms is equal to or more than the above lower limit value, the water repellency is excellent. When the number of carbon atoms is equal to or less than the above upper limit value, the availability and handling properties are excellent.

When the monomer (a1) and the monomer (a2) are used in combination, the ratio of the structural unit based on the monomer (a1) with respect to the total amount of the structural units based on the monomer (a) is preferably from 1 to 50% by mass, more preferably from 5 to 40% by mass, and still more preferably from 10 to 38% by mass. When the above ratio is equal to or more than the above lower limit value, the initial water repellency is further improved. When the above ratio is equal to or less than the above upper limit value, the water repellency after washing is further improved.

When the monomer (a1) and the monomer (a2) are used in combination, the ratio of the structural unit based on the monomer (a2) with respect to the total amount of the structural units based on the monomer (a) is preferably from 50 to 99% by mass, more preferably from 60 to 95% by mass, and still more preferably from 62 to 90% by mass. When the above ratio is equal to or more than the above lower limit value, the initial water repellency is further improved. When the above ratio is equal to or less than the above upper limit value, the water repellency after washing is further improved.

When the monomer (a1) and the monomer (a2) are used in combination, the ratio of the structural unit based on the monomer (a1) and the structural unit based on the monomer (a2) with respect to the total amount of the structural units based on the monomer (a) is preferably 70% by mass or more, more preferably 72% by mass or more, still more preferably 75% by mass or more, particularly preferably 85% by mass or more, and may be 100% by mass. When the above ratio is equal to or more than the above lower limit value, the initial water repellency is further improved. When the above ratio is equal to or less than the above upper limit value, the water repellency after washing is further improved.

When the structural unit based on the monomer (a1) and the structural unit based on the monomer (a2) are used in combination, the mass ratio of the structural unit based on the monomer (a1) with respect to the total amount of the structural unit based on the monomer (a1) and the structural unit based on the monomer (a2) is preferably from 1/99 to 50/50, more preferably from 5/95 to 40/60, and still more preferably from 10/90 to 38/62. When the above mass ratio is equal to or more than the above lower limit value, the water repellency of the treated article is likely to be favorable. When the above mass ratio is equal to or less than the above upper limit value, the washing durability of the treated article is likely to be favorable.

### (Monomer (b))

The monomer (b) is a vinyl halide. As the monomer (b), a vinyl halide having one or two halogen atoms is preferred, and a vinylidene halide having two halogen atoms is more preferred.

The halogen atom contained in the above vinyl halide is preferably a chlorine atom, a bromine atom, or an iodine atom, more preferably a chlorine atom or a bromine atom, and still more preferably a chlorine atom. Further, when the above vinyl halide contains two or more halogen atoms, a plurality of halogen atoms may be the same or different.

The monomer (b) is preferably vinyl chloride or vinylidene chloride.

Two or more types of monomers (b) may be used in combination.

By including the unit (b) in the polymer (A), the adhesiveness to the article to be treated improves, which improves durability. Furthermore, a fine water repellent film is easily formed on the surface of the article, and the water repellency is also improved.

### (Monomer (c))

The monomer (c) is a (meth)acrylate monomer having a polysiloxane structure with a molecular weight of 1,000 to 3,600. By including the unit (c) in the polymer (A), the water slidability of the water repellent film formed on the surface of the article to be treated improves, which improves the water repellency. The molecular weight of the monomer (c) is from 1,000 to 3,600, preferably from 1,200 to 3,500, and more preferably from 1,500 to 3,300. When the molecular weight is equal to or more than the lower limit value of the above range, the unit (c) is easily exposed on the surface of the above water repellent film, thereby improving the water repellency. When the molecular weight is equal to or less than the upper limit value of the above range, the viscosity of the water repellent composition does not become too high, and the water slidability of the above water repellent film improves, thereby improving the water repellency.

The monomer (c) has one or more (meth)acryloyl groups, preferably has 1 to 4 groups, and more preferably has 1 to 2 groups.

The monomer (c) may have a crosslinkable functional group, which will be described later.

The monomer (c) is preferably a (meth)acrylate monomer having a polysiloxane structure represented by the following formula (1) or (2).

R¹-(Si(R²)₂O)ₘ-Si(R²)₂-R³OC(=O)CR⁴=CH₂ (1)

In the above formula (1), R¹ represents a monovalent hydrocarbon group having 1 to 12 carbon atoms, R² represents H or CH₃, R³ represents a divalent hydrocarbon group having 1 to 6 carbon atoms, R⁴ represents H, CH₃ or a chlorine atom, m represents an integer of 8 to 55, and a plurality of R² groups may be the same or different.

CH₂=CR⁵C(=O)OR⁶-(Si(R⁷)₂O)ₙ-Si(R⁷)₂-R⁶OC(=O)CR⁵=CH₂ (2)

In the above formula (2), R⁵ represents H, CH₃ or a chlorine atom, R⁶ represents a divalent hydrocarbon group having 1 to 6 carbon atoms, R⁷ represents H or CH₃, n represents an integer of 8 to 55, a plurality of R⁵ groups may be the same or different, a plurality of R⁶ groups may be the same or different, and a plurality of R⁷ groups may be the same or different.

R¹ preferably has 1 to 10 carbon atoms, more preferably 1 to 8 carbon atoms, and still more preferably 1 to 6 carbon atoms.

Examples of the monovalent hydrocarbon group represented by R¹ include a monovalent saturated hydrocarbon group and a monovalent unsaturated hydrocarbon group. Examples of the monovalent unsaturated hydrocarbon group include a monovalent saturated hydrocarbon group in which one or more carbon-carbon single bonds have been replaced with carbon-carbon double bonds or triple bonds. R¹ is linear, branched, or cyclic, and is preferably linear.

R¹ is preferably a methyl group, an ethyl group, a propyl group, a butyl group, a hexyl group, or an octyl group.

R² is preferably CH₃. The plurality of R² groups in the above formula (1) are preferably the same, and it is preferable that all of the plurality of R² groups are CH₃.

R³ preferably has 1 to 6 carbon atoms, more preferably 1 to 4 carbon atoms, and still more preferably 1 to 3 carbon atoms.

Examples of the divalent hydrocarbon group represented by R³ include a divalent saturated hydrocarbon group and a divalent unsaturated hydrocarbon group. Examples of the divalent unsaturated hydrocarbon group include a group in which one or more carbon-carbon single bonds in a divalent saturated hydrocarbon group are replaced with carbon-carbon double bonds or triple bonds. R³ is linear or branched, and is preferably linear.

R³ is preferably a methylene group, an ethylene group, a propylene group, a trimethylene group, or a hexylene group.

R⁴ is preferably H or CH₃, and more preferably CH₃.

m is preferably from 10 to 45, more preferably from 12 to 43, and still more preferably from 16 to 40.

R⁵ is preferably H or CH₃, and more preferably CH₃. The plurality of R⁵ groups in the above formula (2) are preferably the same, and it is preferable that both of the plurality of R⁵ groups are CH₃.

R⁶ preferably has 1 to 6 carbon atoms, more preferably 1 to 4 carbon atoms, and still more preferably 1 to 3 carbon atoms.

Examples of the divalent hydrocarbon group represented by R⁶ include a divalent saturated hydrocarbon group and a divalent unsaturated hydrocarbon group. Examples of the divalent unsaturated hydrocarbon group include a group in which one or more carbon-carbon single bonds in a divalent saturated hydrocarbon group are replaced with carbon-carbon double bonds or triple bonds. R⁶ is linear or branched, and is preferably linear.

R⁶ is preferably a methylene group, an ethylene group, a propylene group, a trimethylene group, or a hexylene group. The plurality of R⁶ groups in the above formula (2) are preferably the same.

R⁷ is preferably CH₃. The plurality of R⁷ groups in the above formula (2) are preferably the same, and it is preferable that all of the plurality of R⁷ groups are CH₃.

n is preferably from 10 to 45, more preferably from 12 to 43, and still more preferably from 16 to 40.

A commercially available product can be used as the monomer (c). Examples of the monomer (c) represented by the above formula (1) include a compound in which R¹ is a butyl group, all of R² groups are CH₃, R³ is a trimethylene group, R⁴ is CH₃, m is 27, and the molecular weight is 2,300 (X-22-174BX, manufactured by Shin-Etsu Silicone Co., Ltd.). Examples of the monomer (c) represented by the above formula (2) include a compound in which all of R⁵ groups are CH₃, all of R⁶ groups are trimethylene groups, all of R⁷ groups are CH₃, n is 27, and the molecular weight is 2,370 (X-22-164C, manufactured by Shin-Etsu Silicone Co., Ltd.).

Furthermore, the monomer (c) can also be synthesized by the method described in Japanese Unexamined Patent Application, First Publication No. 59-78263. More specifically, the monomer (c) represented by the above formula (2) can be obtained by obtaining a living polymer through anionic polymerization of cyclosiloxane using lithium trialkylsilanolate as an initiator, and further reaction with γ-methacryloxypropyldimethylmonochlorosilane.

### (Monomer (d))

The monomer (d) is a crosslinkable monomer. A crosslinkable monomer is a monomer having a crosslinkable functional group and one group polymerizable with a (meth)acryloyl group, or a monomer having two or more groups polymerizable with a (meth)acryloyl group. It should be noted that the monomer (d) does not have a polysiloxane structure.

When the polymer (A) has a structural unit based on the monomer (d), the washing and friction durability are further improved.

Examples of the group polymerizable with a (meth)acryloyl group include a group having a carbon-carbon double bond at the molecular end, and for example, a (meth)acryloyl group, a vinyl group, or an allyl group is preferred.

As the crosslinkable functional group, a functional group having at least one bond of a covalent bond, an ionic bond, or a hydrogen bond, or a functional group capable of forming a crosslinked structure through the interaction of the above bonds is preferred.

As the above functional group, an isocyanate group, a blocked isocyanate group, an alkoxysilyl group, a primary amino group, an alkoxymethylamide group, a silanol group, a primary amide group, an epoxy group, a hydroxyl group, an oxazoline group, a carboxyl group, a sulfonic acid group, or the like is preferred, and a hydroxyl group, a blocked isocyanate group, a primary amino group, or an epoxy group is particularly preferred.

As the monomer (d), (meth)acrylates having a crosslinkable functional group, acrylamides, vinyl ethers having a crosslinkable functional group, or vinyl esters having a crosslinkable functional group are preferred.

Examples of the monomer (d) include the following compounds.

2-isocyanatoethyl (meth)acrylate, 3-isocyanatopropyl (meth)acrylate, 4-isocyanatobutyl (meth)acrylate, a 2-butanone oxime adduct of 2-isocyanatoethyl (meth)acrylate (2-[0-(1'-methylpropylideneamino)carboxyamino]ethyl (meth)acrylate), a pyrazole adduct of 2-isocyanatoethyl (meth)acrylate, a 3,5-dimethylpyrazole adduct of 2-isocyanatoethyl (meth)acrylate (2-[(3,5-dimethylpyrazolyl)carbonylamino)ethyl (meth)acrylate), a 3-methylpyrazole adduct of 2-isocyanatoethyl (meth)acrylate, an ε-caprolactam adduct of 2-isocyanatoethyl (meth)acrylate, a 2-butanone oxime adduct of 3-isocyanatopropyl (meth)acrylate, and a pyrazole adduct of 3-isocyanatopropyl (meth)acrylate.

A 3,5-dimethylpyrazole adduct of 3-isocyanatopropyl (meth)acrylate, a 3-methylpyrazole adduct of 3-isocyanatopropyl (meth)acrylate, an ε-caprolactam adduct of 3-isocyanatopropyl (meth)acrylate, a 2-butanone oxime adduct of 4-isocyanatobutyl (meth)acrylate, a pyrazole adduct of 4-isocyanatobutyl (meth)acrylate, a 3,5-dimethylpyrazole adduct of 4-isocyanatobutyl (meth)acrylate, a 3-methylpyrazole adduct of 4-isocyanatobutyl (meth)acrylate, and an ε-caprolactam adduct of 4-isocyanatobutyl (meth)acrylate.

Methoxymethyl (meth)acrylamide, ethoxymethyl (meth)acrylamide, butoxymethyl (meth)acrylamide, diacetone acrylamide, γ-methacryloyloxypropyltrimethoxysilane, trimethoxyvinylsilane, and vinyltrimethoxysilane.

t-butyl (meth)acrylamide sulfonic acid, (meth)acrylamide, N-methylol (meth)acrylamide, N-butoxymethyl (meth)acrylamide, diacetone (meth)acrylamide, glycidyl (meth)acrylate, 2-hydroxyethyl (meth)acrylate, 2-hydroxypropyl (meth)acrylate, 4-hydroxybutyl (meth)acrylate, 3-chloro-2-hydroxypropyl methacrylate, polyoxyalkylene glycol mono(meth)acrylate, (meth)acrylic acid, 2-(meth)acryloyloxyethyl succinic acid, 2-(meth)acryloyloxyhexahydrophthalic acid, 2-(meth)acryloyloxyethyl acid phosphate, allyl (meth)acrylate, 2-vinyl-2-oxazoline, and a polycaprolactone ester of 2-vinyl-4-methyl-(2-vinyloxazoline) hydroxyethyl (meth)acrylate.

Tri(meth)allyl isocyanurate (T(M)AIC, manufactured by Nippon Kasei Chemical Co., Ltd.), triallyl cyanurate (TAC, manufactured by Nippon Kasei Chemical Co., Ltd.), and 3-(methyl ethyl ketoxime)isocyanatomethyl-3,5,5-trimethylcyclohexyl(2-hydroxyethyl methacrylate) cyanate (Techcoat HE-6P, manufactured by Kyoken Kasei). A polycaprolactone ester of hydroxyethyl(meth)acrylate (Placcel FA, FM series, manufactured by Daicel Chemical Industries, Ltd.).

As the monomer (d), N-methylol (meth)acrylamide, 2-hydroxyethyl (meth)acrylate, glycidyl (meth)acrylate, 3-chloro-2-hydroxypropyl methacrylate or a polycaprolactone ester of hydroxyethyl (meth)acrylate (Placcel FA, FM series, manufactured by Daicel Chemical Industries, Ltd.), and a 3,5-dimethylpyrazole adduct of 2-isocyanatoethyl (meth)acrylate are preferred.

### (Monomer (e))

The monomer (e) is a monomer excluding the monomer (a), the monomer (b), the monomer (c), and the monomer (d).

Examples of the monomer (e) include the following compounds.

Methyl (meth)acrylate, ethyl (meth)acrylate, propyl (meth)acrylate, butyl (meth)methacrylate, cyclohexyl (meth)acrylate, 2-ethylhexyl (meth)acrylate, n-hexyl (meth)acrylate, benzyl (meth)acrylate, octyl (meth)acrylate, decyl methacrylate, cyclododecyl acrylate, 3-ethoxypropyl acrylate, methoxy-butyl acrylate, 2-ethylbutyl acrylate, 1,3-dimethylbutyl acrylate, and 2-methylpentyl acrylate.

Vinyl acetate, vinyl propionate, butene, isoprene, butadiene, ethylene, propylene, vinylethylene, pentene, ethyl-2-propylene, butylethylene, cyclohexylpropylethylene, decylethylene, dodecylethylene, hexene, isohexylethylene, neopentylethylene, (1,2-diethoxycarbonyl)ethylene, (1,2-dipropoxycarbonyl)ethylene, methoxyethylene, ethoxyethylene, butoxyethylene, 2-methoxypropylene, pentyloxyethylene, cyclopentanoyloxyethylene, cyclopentylacetoxyethylene, styrene, α-methylstyrene, p-methylstyrene, hexylstyrene, octylstyrene, and nonylstyrene.

N-methyl (meth)acrylamide, N,N-dimethyl (meth)acrylamide, N,N-diethyl (meth)acrylamide, N,N-dimethylaminoethyl (meth)acrylamide, N,N-dimethylaminopropyl (meth)acrylamide, N,N-diethylaminoethyl (meth)acrylamide, N,N-diethylaminopropyl (meth)acrylamide, dimethylaminoethyl (meth)acrylate, diethylaminoethyl (meth)acrylate, dimethylaminopropyl (meth)acrylate, (meth)acryloyloxyethyl trimethylammonium chloride, (meth)acryloyloxypropyl trimethylammonium chloride, (meth)acrylamideethyl trimethylammonium chloride, (meth)acrylamidepropyl trimethylammonium chloride, and (meth)acryloyl morpholine.

A vinyl alkyl ether, a halogenated alkyl vinyl ether, a vinyl alkyl ketone, aziridinyl ethyl (meth)acrylate, a 2-ethylhexyl polyoxyalkylene (meth)acrylate, and a polyoxyalkylene di(meth)acrylate.

A crotonic acid alkyl ester, a maleic acid alkyl ester, a fumaric acid alkyl ester, a citraconic acid alkyl ester, a mesaconic acid alkyl ester, triallyl cyanurate, allyl acetate, N-vinylcarbazole, maleimide, N-methyl maleimide, a (meth)acrylate having silicone within a side chain, a (meth)acrylate having a urethane bond, a (meth)acrylate having a polyoxyalkylene chain whose terminal is an alkyl group having 1 to 4 carbon atoms, and an alkylene di(meth)acrylate.

A total ratio of the unit (a), the unit (b) and the unit (c) with respect to all units constituting the polymer (A) is preferably 80% by mass or more, more preferably from 80 to 99% by mass, and still more preferably from 82 to 98% by mass. When the total ratio of the unit (a), the unit (b) and the unit (c) is equal to or more than the above lower limit value, the water repellency of the article treated with the present composition is further improved.

When the polymer (A) contains either one or both of the unit (d) and the unit (e), the total ratio of the unit (a), the unit (b) and the unit (c) with respect to all units constituting the polymer (A) is preferably 80% by mass or more, more preferably 85% by mass or more, still more preferably 90% by mass or more, and particularly preferably 95% by mass or more.

A ratio of the unit (a) with respect to all units constituting the polymer (A) is preferably from 73 to 95% by mass, more preferably from 74 to 92% by mass, and still more preferably from 75 to 90% by mass. A ratio of the unit (a) with respect to the total amount of the unit (a), the unit (b), and the unit (c) is preferably from 73 to 95% by mass, more preferably from 75 to 95% by mass, and still more preferably from 78 to 94% by mass. When the ratio of the unit (a) is equal to or more than the above lower limit value, the water repellency of the article treated with the present composition is further improved. When the ratio of the unit (a) is equal to or less than the above upper limit value, the unit (b), the unit (c) and other units can be sufficiently contained, and the water repellency of the article treated with the present composition is further improved.

A ratio of the unit (b) with respect to all units constituting the polymer (A) is from 1 to 12% by mass, preferably from 2 to 11% by mass, and more preferably from 3 to 10% by mass. A ratio of the unit (b) with respect to the total amount of the unit (a), the unit (b), and the unit (c) is preferably from 1 to 12% by mass, more preferably from 2 to 11% by mass, and still more preferably from 3 to 10% by mass. When the ratio of the unit (b) is equal to or more than the above lower limit value, the water repellency of the article treated with the present composition is further improved. When the ratio of the unit (b) is equal to or less than the above upper limit value, the unit (a), the unit (c) and other units can be sufficiently contained, and the water repellency of the article treated with the present composition is further improved.

A ratio of the unit (c) with respect to all units constituting the polymer (A) is preferably from 0.5 to 15% by mass, more preferably from 0.8 to 14% by mass, and still more preferably from 1 to 13% by mass. A ratio of the unit (c) with respect to the total amount of the unit (a), the unit (b), and the unit (c) is preferably from 1 to 15% by mass, more preferably from 1 to 14% by mass, and still more preferably from 1 to 10% by mass. When the ratio of the unit (c) is equal to or more than the above lower limit value, the water repellency of the article treated with the present composition is further improved. When the ratio of the unit (c) is equal to or less than the above upper limit value, the unit (a), the unit (b) and other units can be sufficiently contained, and the water repellency of the article treated with the present composition is further improved.

A total ratio of the unit (a) and the unit (b) with respect to all units constituting the polymer (A) is preferably 70% by mass or more, more preferably from 75 to 98% by mass, and still more preferably from 80 to 97% by mass. When the total ratio of the unit (a) and the unit (b) is equal to or more than the above lower limit value, the water repellency of the article treated with the present composition is further improved. When the total ratio of the unit (a) and the unit (b) is equal to or less than the above upper limit value, the unit (c) and other units can be sufficiently contained, and the water repellency of the article treated with the present composition is further improved.

A total ratio of the unit (b) and the unit (c) with respect to all units constituting the polymer (A) is preferably from 4 to 30% by mass, more preferably from 5 to 25% by mass, and still more preferably from 6 to 22% by mass. When the total ratio of the unit (b) and the unit (c) is equal to or more than the above lower limit value, the water repellency of the article treated with the present composition is further improved. When the total ratio of the unit (b) and the unit (c) is equal to or less than the above upper limit value, the unit (a) and other units can be sufficiently contained, and the water repellency of the article treated with the present composition is further improved.

A total ratio of the unit (c) and the unit (a) with respect to all units constituting the polymer (A) is preferably from 50.1 to 95% by mass, more preferably from 55 to 90% by mass, and still more preferably from 60 to 90% by mass. When the total ratio of the unit (c) and the unit (a) is equal to or more than the above lower limit value, the water repellency of the article treated with the present composition is further improved. When the total ratio of the unit (c) and the unit (a) is equal to or less than the above upper limit value, the unit (b) and other units can be sufficiently contained, and the water repellency of the article treated with the present composition is further improved.

A mass ratio of unit (a)/unit (b) is preferably from 1.5 to 25, more preferably from 2.0 to 24, and still more preferably from 3.0 to 23. When the mass ratio of unit (a)/unit (b) is equal to or more than the above lower limit value, the water repellency of the article treated with the present composition is further improved. When the mass ratio of unit (a)/unit (b) is equal to or less than the above upper limit value, polymerization of the monomer components proceeds easily during the production of the polymer (A).

A mass ratio of unit (b)/unit (c) is preferably from 0.6 to 15, more preferably from 0.7 to 13, and still more preferably from 0.8 to 12. When the mass ratio of unit (b)/unit (c) is equal to or more than the above lower limit value, the water repellency of the article treated with the present composition is further improved. When the mass ratio of unit (b)/unit (c) is equal to or less than the above upper limit value, polymerization of the monomer components proceeds easily during the production of the polymer (A).

A mass ratio of unit (c)/unit (a) is preferably from 0.001 to 0.4, more preferably from 0.005 to 0.27, and still more preferably from 0.010 to 0.17. When the mass ratio of unit (c)/unit (a) is equal to or more than the above lower limit value, the water repellency of the article treated with the present composition is further improved. When the mass ratio of unit (c)/unit (a) is equal to or less than the above upper limit value, polymerization of the monomer components proceeds easily during the production of the polymer (A).

A mass ratio of (unit (a) + unit (b))/unit (c) is preferably from 1.0 to 120, more preferably from 1.5 to 110, and still more preferably from 2.0 to 100. When the mass ratio of (unit (a) + unit (b))/unit (c) is equal to or more than the above lower limit value, the water repellency of the article treated with the present composition is further improved. When the mass ratio of (unit (a) + unit (b))/unit (c) is equal to or less than the above upper limit value, polymerization of the monomer components proceeds easily during the production of the polymer (A).

When the polymer (A) contains the unit (d), a ratio of the unit (d) with respect to all units constituting the polymer (A) is preferably from 0.1 to 15% by mass, more preferably from 0.2 to 10% by mass, and still more preferably from 0.5 to 6% by mass. When the ratio of the unit (d) is equal to or more than the above lower limit value, the water repellency of the article treated with the present composition is further improved. When the ratio of the unit (d) is equal to or less than the above upper limit value, the unit (a), the unit (b), the unit (c) and other units can be sufficiently contained, and the water repellency of the article treated with the present composition is further improved.

When the polymer (A) contains the unit (e), a ratio of the unit (e) with respect to all units constituting the polymer (A) is preferably from 0.1 to 15% by mass, more preferably from 0.2 to 10% by mass, and still more preferably from 0.5 to 6% by mass. When the ratio of the unit (e) is equal to or more than the above lower limit value, the water repellency of the article treated with the present composition is further improved. When the ratio of the unit (e) is equal to or less than the above upper limit value, the unit (a), the unit (b), the unit (c) and other units can be sufficiently contained, and the water repellency of the article treated with the present composition is further improved.

When the polymer (A) contains the unit (d) or the unit (e), a total ratio of the unit (d) and the unit (e) with respect to all units constituting the polymer (A) is preferably from 0.2 to 30% by mass, more preferably from 0.4 to 20% by mass, and still more preferably from 1 to 12% by mass. When the ratio of the unit (d) and the unit (e) is equal to or more than the above lower limit value, the water repellency of the article treated with the present composition is further improved. When the ratio of the unit (d) and the unit (e) is equal to or less than the above upper limit value, the unit (a), the unit (b) and the unit (c) can be sufficiently contained, and the water repellency of the article treated with the present composition is further improved.

The ratio of each unit can be calculated from the reaction rate of each monomer component by ¹H-NMR, gas chromatography, and high performance liquid chromatography. In a case where the conversion rate of the monomer component to the polymer (A) is high (for example, 90% or more) during the production of the polymer (A), the ratio of each unit may be calculated based on the charged amount of the monomer component.

The Mn of the polymer (A) is preferably from 5,000 to 200,000, more preferably from 10,000 to 150,000, and still more preferably from 20,000 to 120,000. When the Mn of the polymer (A) is equal to or more than the above lower limit value, the water repellency of the article treated with the present composition is further improved. When the Mn of the polymer (A) is equal to or less than the above upper limit value, the water dispersibility of the polymer (A) is further improved.

The Mw of the polymer (A) is preferably from 8,000 to 600,000, more preferably from 16,000 to 400,000, and still more preferably from 32,000 to 350,000. When the Mw of the polymer (A) is equal to or more than the above lower limit value, the water repellency of the article treated with the present composition is further improved. When the Mw of the polymer (A) is equal to or less than the above upper limit value, the water dispersibility of the polymer (A) is further improved.

### (Medium)

Examples of the medium include water, an alcohol, a glycol, a glycol ether, a halogen compound, a hydrocarbon, a ketone, an ester, an ether, a nitrogen compound, a sulfur compound, an inorganic solvent, and an organic acid. Among these, from the viewpoints of solubility and ease of handling, one or more media selected from the group consisting of water, an alcohol, a glycol, a glycol ether, and a glycol ester are preferred.

Examples of the alcohol include methanol, ethanol, 1-propanol, 2-propanol, 1-butanol, 2-butanol, 2-methylpropanol, 1,1-dimethylethanol, 1-pentanol, 2-pentanol, 3-pentanol, 2-methyl-1-butanol, 3-methyl-1-butanol, 1,1-dimethylpropanol, 3-methyl-2-butanol, 1,2-dimethylpropanol, 1-hexanol, 2-methyl-1-pentanol, 4-methyl-2-pentanol, 2-ethyl-1-butanol, 1-heptanol, 2-heptanol, and 3-heptanol.

Examples of the glycol or glycol ether include ethylene glycol, ethylene glycol monomethyl ether, ethylene glycol monoethyl ether, ethylene glycol monobutyl ether, ethylene glycol monomethyl ether acetate, ethylene glycol monoethyl ether acetate, ethylene glycol monobutyl ether acetate, propylene glycol, propylene glycol monomethyl ether, propylene glycol monoethyl ether, propylene glycol dimethyl ether, dipropylene glycol, dipropylene glycol monomethyl ether, dipropylene glycol dimethyl ether, dipropylene glycol monoethyl ether, tripropylene glycol, tripropylene glycol monomethyl ether, polypropylene glycol, and hexylene glycol.

Examples of the halogen compound include a halogenated hydrocarbon and a halogenated ether. It is preferable that the halogen compound does not contain fluorine. Examples of the halogenated hydrocarbon include a hydrochlorocarbon and a hydrobromocarbon.

Examples of the hydrocarbon include an aliphatic hydrocarbon, an alicyclic hydrocarbon, and an aromatic hydrocarbon.

Examples of the aliphatic hydrocarbon include pentane, 2-methylbutane, 3-methylpentane, hexane, 2,2-dimethylbutane, 2,3-dimethylbutane, heptane, octane, 2,2,4-trimethylpentane, 2,2,3-trimethylhexane, decane, undecane, dodecane, 2,2,4,6,6-pentamethylheptane, tridecane, tetradecane, and hexadecane.

Examples of the alicyclic hydrocarbon include cyclopentane, methylcyclopentane, cyclohexane, methylcyclohexane, and ethylcyclohexane.

Examples of the aromatic hydrocarbon include benzene, toluene, and xylene.

Examples of the ketone include acetone, methyl ethyl ketone, 2-pentanone, 3-pentanone, 2-hexanone, and methyl isobutyl ketone.

Examples of the ester include methyl acetate, ethyl acetate, butyl acetate, methyl propionate, methyl lactate, ethyl lactate, and pentyl lactate.

Examples of the ether include diisopropyl ether, dioxane, and tetrahydrofuran.

Examples of the nitrogen compound include pyridine, N,N-dimethylformamide, N,N-dimethylacetamide, and N-methylpyrrolidone.

Examples of the sulfur compound include dimethyl sulfoxide and sulfolane.

Examples of the inorganic solvent include liquid carbon dioxide.

Examples of the organic acid include acetic acid, propionic acid, malic acid, and lactic acid.

A single type of medium may be used alone, or two or more types thereof may be mixed and used in combination. When two or more types of media are mixed and used in combination, it is preferable to use the media by mixing with water. By using a mixed medium, it is easy to control the solubility and dispersibility of the polymer, and it is easy to control the permeability and wettability with respect to an article, a solvent drying speed, and the like during processing.

When the medium is a mixture of an organic solvent and water, the content of the organic solvent is preferably from 1 to 40 parts by mass, more preferably from 2 to 30 parts by mass, and still more preferably from 3 to 25 parts by mass with respect to 100 parts by mass of water.

### (Surfactant)

Examples of the surfactant include a hydrocarbon-based surfactant. Examples of the hydrocarbon-based surfactant include an anionic surfactant, a nonionic surfactant, a cationic surfactant, and an amphoteric surfactant.

As the surfactant, from the viewpoint of dispersion stability, it is preferable to use a nonionic surfactant and a cationic surfactant or an amphoteric surfactant in combination, or an anionic surfactant alone, and it is more preferable to use a nonionic surfactant and a cationic surfactant in combination.

A mass ratio of the nonionic surfactant with respect to the cationic surfactant is preferably from 97/3 to 40/60.

In a specific combination of a nonionic surfactant and a cationic surfactant, since the total amount thereof with respect to the polymer (A) (100% by mass) can be set to 5% by mass or less, the adverse effects on the water repellency of the article can be reduced.

As the nonionic surfactant, one or more selected from the group consisting of surfactants s¹ to s⁶ are preferred.

### Surfactant s¹:

The surfactant s¹ is a polyoxyalkylene monoalkyl ether, a polyoxyalkylene monoalkenyl ether, or a polyoxyalkylene monoalkapolyenyl ether.

As the surfactant s¹, a polyoxyalkylene monoalkyl ether or a polyoxyalkylene monoalkenyl ether is preferred. One type of the surfactant s¹ may be used alone, or two or more types thereof may be used in combination.

As the alkyl group, the alkenyl group, or the alkapolyenyl group (hereinafter, the alkyl group, the alkenyl group, and the alkapolyenyl group will be collectively referred to as an R^{s} group), a group having 4 to 26 carbon atoms is preferred. The R^{s} group may be linear or branched. As a branched R^{s} group, a secondary alkyl group, a secondary alkenyl group, or a secondary alkapolyenyl group is preferred.

Specific examples of the R^{s} group include an octyl group, a dodecyl group, a tetradecyl group, a hexadecyl group, a stearyl group (octadecyl group), a behenyl group (docosyl group), and an oleyl group (9-octadecenyl group).

As the polyoxyalkylene (hereinafter referred to as POA) chain, a chain in which either one or both of at least two polyoxyethylene (hereinafter referred to as POE) chains or polyoxypropylene (hereinafter referred to as POP) chains are connected is preferred. The POA chain may be a chain composed of one type of POA chain, or may be a chain composed of two or more types of POA chains. When it is composed of two or more types of POA chains, the respective POA chains are preferably linked in a block form.

As the surfactant s¹, a compound (s¹¹) is more preferred.

R¹⁰O[CH₂CH(CH₃)O]ₛ-(CH₂CH₂O)ᵣH (s¹¹),

provided that R¹⁰ is an alkyl group having 8 or more carbon atoms or an alkenyl group having 8 or more carbon atoms, r is an integer of 5 to 50, and s is an integer of 0 to 20.

When r is 5 or more, it becomes soluble in water and will be uniformly dissolved in an aqueous medium, resulting in favorable permeability of the water repellent composition into an article. When r is 50 or less, hydrophilicity is suppressed and the water repellency is favorable.

When s is 20 or less, it becomes soluble in water and will be uniformly dissolved in an aqueous medium, resulting in favorable permeability of the water repellent composition into an article.

When r and s are 2 or more, the POE chain and the POP chain are linked in a block form.

R¹⁰ is preferably linear or branched.

r is preferably an integer of 10 to 30.

s is preferably an integer of 0 to 10.

Examples of the compound (s¹¹) include the following compounds. However, the POE chain and the POP chain are linked in a block form.

C₁₈H₃₇O[CH₂CH(CH₃)O]₂-(CH₂CH₂O)₃₀H,

C₁₈H₃₅O-(CH₂CH₂O)₃₀H,

C₁₆H₃₃0[CH₂CH(CH₃)O]₅-(CH₂CH₂O)₂₀H,

C₁₂H₂₅O[CH₂CH(CH₃)O]₂-(CH₂CH₂O)₁₅H,

(C₈H₁₇)(C₆H₁₃)CHO-(CH₂CH₂O)₁₅H,

C₁₀H₂₁O[CH₂CH(CH₃)O]₂-(CH₂CH₂O)₁₅H.

### Surfactant s²:

The surfactant s² is a compound having one or more carbon-carbon triple bonds and one or more hydroxyl groups in the molecule.

As the surfactant s², a compound having one carbon-carbon triple bond and one or two hydroxyl groups in the molecule is preferred.

The surfactant s² may have a POA chain in the molecule. Examples of the POA chain include a POE chain, a POP chain, a chain in which POE chains and POP chains are randomly linked, and a chain in which POE chains and POP chains are linked in a block form.

As the surfactant s², compounds (s²¹) to (s²⁴) are preferred.

HO-C(R¹¹)(R¹²)-C≡C-C(R¹³)(R¹⁴)-OH (s²¹),

HO-(A¹O)ᵤ-C(R¹¹)(R¹²)-C≡C-C(R¹³)(R¹⁴)-(OA²)ᵥ-OH (s²²),

HO-C(R¹⁵)(R¹⁶)-C≡C-H (s²³),

HO-(A³O)_{w}-C(R¹⁵)(R¹⁶)-C≡C-H (s²⁴).

Each of A¹ to A³ is an alkylene group.

Each of u and v is an integer of 0 or more, and (u + v) is an integer of at least 1.

w is an integer of at least 1.

When each of u, v and w is 2 or more, each of A¹, A² and A³ may be the same or different.

The POA chain is preferably a POE chain, a POP chain, or a chain containing a POE chain and a POP chain. The number of repeating units in the POA chain is preferably from 1 to 50.

Each of R¹¹ to R¹⁶ is a hydrogen atom or an alkyl group.

As the alkyl group, an alkyl group having 1 to 12 carbon atoms is preferred, and an alkyl group having 1 to 4 carbon atoms is more preferred. Examples of the alkyl group include a methyl group, an ethyl group, a propyl group, a butyl group, and an isobutyl group.

As the compound (s²²), a compound (s²⁵) is preferred.

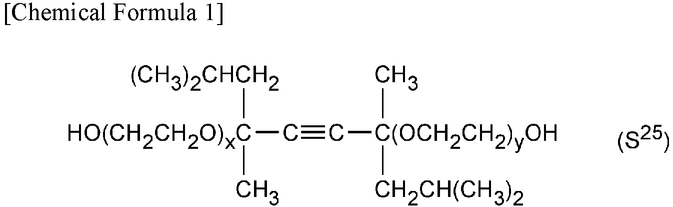

However, each of x and y is an integer of 0 to 100.

One type of the compound (s²⁵) may be used alone, or two or more types thereof may be used in combination.

As the compound (s²⁵), a compound in which x and y are 0, a compound in which an average of the sum of x and y is from 1 to 4, or a compound in which an average of the sum of x and y is from 10 to 30 is preferred.

### Surfactant s³:

The surfactant s³ is a compound in which a POE chain is linked to a POA chain having two or more oxyalkylenes of three or more carbon atoms connected in series, and both terminals are hydroxyl groups.

As the above POA chain, either one or both of polyoxytetramethylene (hereinafter referred to as POT) and POP chains are preferred.

As the surfactant s³, a compound (s³¹) or a compound (s³²) is preferred.

HO(CH₂CH₂O)_{g1}(C₃H₆O)ₜ(CH₂CH₂O)_{g2}H (s³¹),

HO(CH₂CH₂O)_{g1}(CH₂CH₂CH₂CH₂O)ₜ(CH₂CH₂O)_{g2}H (s³²).

g1 is an integer of 0 to 200.

t is an integer of 2 to 100.

g2 is an integer of 0 to 200.

When g1 is 0, g2 is an integer of at least 2. When g2 is 0, g1 is an integer of at least 2.
-C₃H₆- may be -CH(CH₃)CH₂-, -CH₂CH(CH₃)-, or a mixture of -CH(CH₃)CH₂- and -CH₂CH(CH₃)-.

The POA chain is in a block form.

Examples of the surfactant s³ include the following compounds.

HO-(CH₂CH₂O)₁₅-(C₃H₆O)₃₅-(CH₂CH₂O)₁₅H,

HO-(CH₂CH₂O)₈-(C₃H₆O)₃₅-(CH₂CH₂O)₈H,

HO-(CH₂CH₂O)₄₅-(C₃H₆O)₁₇-(CH₂CH₂O)₄₅H,

HO-(CH₂CH₂O)₃₄-(CH₂CH₂CH₂CH₂O)₂₈-(CH₂CH₂O)₃₄H.

### Surfactant s⁴:

The surfactant s⁴ is a compound having an amine oxide moiety in the molecule.

As the surfactant s⁴, a compound (s⁴¹) is preferred.

(R¹⁷)(R¹⁸)(R¹⁹)N(→O) (s⁴¹).

Each of R¹⁷ to R¹⁹ is a monovalent hydrocarbon group.

In the present specification, a surfactant having an amine oxide (N→O) is treated as a nonionic surfactant.

One type of the compound (s⁴¹) may be used alone, or two or more types thereof may be used in combination.

As the compound (s⁴¹), a compound (s⁴²) is preferred from the viewpoint of dispersion stability of the polymer.

(R²⁰)(CH₃)₂N(→O) (s⁴²).

R²⁰ is an alkyl group having 6 to 22 carbon atoms, an alkenyl group having 6 to 22 carbon atoms, a phenyl group to which an alkyl group having 6 to 22 carbon atoms is bonded, or a phenyl group to which an alkenyl group having 6 to 22 carbon atoms is bonded. R²⁰ is preferably an alkyl group having 8 to 22 carbon atoms, or an alkenyl group having 8 to 22 carbon atoms.

Examples of the compound (s⁴²) include the following compounds.

[H(CH₂)₁₂](CH₃)₂N(→O),

[H(CH₂)₁₄](CH₃)₂N(→O),

[H(CH₂)₁₆](CH₃)₂N(→O),

[H(CH₂)₁₈](CH₃)₂N(→O).

### Surfactant s⁵:

The surfactant s⁵ is a polyoxyethylene mono(substituted phenyl) ether condensate or a polyoxyethylene mono(substituted phenyl) ether.

As the substituted phenyl group, a phenyl group substituted with a monovalent hydrocarbon group is preferred, and a phenyl group substituted with an alkyl group, an alkenyl group or a styryl group is more preferred.

The surfactant s⁵ is preferably a polyoxyethylene mono(alkylphenyl)ether condensate, a polyoxyethylene mono(alkenylphenyl)ether condensate, a polyoxyethylene mono(alkylphenyl)ether, a polyoxyethylene mono(alkenylphenyl)ether, or a polyoxyethylene mono[(alkyl)(styryl)phenyl]ether.

Examples of the polyoxyethylene mono(substituted phenyl) ether condensate or polyoxyethylene mono(substituted phenyl) ether include a formaldehyde condensate of a polyoxyethylene mono(nonylphenyl) ether, a polyoxyethylene mono(nonylphenyl) ether, a polyoxyethylene mono(octylphenyl) ether, a polyoxyethylene mono(oleylphenyl) ether, a polyoxyethylene mono[(nonyl)(styryl)phenyl] ether, and a polyoxyethylene mono[(oleyl)(styryl)phenyl] ether.

### Surfactant s⁶:

The surfactant s⁶ is a fatty acid ester of a polyol.

The polyol represents glycerin, sorbitan, sorbit, a polyglycerin, a polyethylene glycol, a polyoxyethylene glyceryl ether, a polyoxyethylene sorbitan ether or a polyoxyethylene sorbit ether.

Examples of the surfactant s⁶ include a 1:1 (molar ratio) ester of stearic acid and polyethylene glycol, a 1:4 (molar ratio) ester of an ether of sorbit and polyethylene glycol and oleic acid, a 1:1 (molar ratio) ester of an ether of polyoxyethylene glycol and sorbitan and stearic acid, a 1:1 (molar ratio) ester of an ether of polyethylene glycol and sorbitan and oleic acid, a 1:1 (molar ratio) ester of dodecanoic acid and sorbitan, a 1:1 or 2: 1 (molar ratio) ester of oleic acid and decaglycerin, and a 1:1 or 2: 1 (molar ratio) ester of stearic acid and decaglycerin.

### Surfactant s⁷:

When the surfactant contains a cationic surfactant, the surfactant s⁷ is preferred as the cationic surfactant.

The surfactant s⁷ is a substituted ammonium salt.

As the surfactant s⁷, an ammonium salt in which one or more hydrogen atoms bonded to a nitrogen atom are substituted with an alkyl group, an alkenyl group, or a POA chain having a hydroxyl group at the end is preferred, and a compound (s⁷¹) is more preferred.

[(R²¹)₄N⁺]·X⁻ (s⁷¹).

R²¹ is a hydrogen atom, an alkyl group having 1 to 22 carbon atoms, an alkenyl group having 2 to 22 carbon atoms, or a POA chain having a hydroxyl group at the end. The four R²¹ groups may be the same or different, but not all of the four R²¹ groups are hydrogen atoms at the same time.

R²¹ is preferably a long-chain alkyl group having 6 to 22 carbon atoms, or a long-chain alkenyl group having 6 to 22 carbon atoms.

When R²¹ is an alkyl group other than a long-chain alkyl group, R²¹ is preferably a methyl group or an ethyl group.

When R²¹ is a POA chain having a hydroxyl group at the end, the POA chain is preferably a POE chain.

X⁻ is a counter ion.

X⁻ is preferably a chlorine ion, an ethyl sulfate ion or an acetate ion.

Examples of the compound (s⁷¹) include monostearyl trimethyl ammonium chloride, monostearyl dimethyl monoethyl ammonium ethyl sulfate, mono(stearyl) monomethyl di(polyethylene glycol) ammonium chloride, monofluorohexyl trimethyl ammonium chloride, di(tallow alkyl) dimethyl ammonium chloride, and dimethyl monococonut amine acetate.

### Surfactant s⁸:

When the surfactant contains an amphoteric surfactant, the surfactant s⁸ is preferred as the amphoteric surfactant.

The surfactant s⁸ is an alanine, an imidazolinium betaine, an amidobetaine, or an acetic acid betaine.

As a hydrophobic group included in the surfactant s⁸, a long-chain alkyl group having 6 to 22 carbon atoms, or a long-chain alkenyl group having 6 to 22 carbon atoms is preferred.

Examples of the surfactant s⁸ include dodecyl betaine, stearyl betaine, dodecyl carboxymethyl hydroxyethyl imidazolinium betaine, dodecyl dimethylaminoacetic acid betaine and fatty acid amidopropyldimethylaminoacetic acid betaine.

### Surfactant s⁹:

The surfactant s⁹ may be used as a surfactant.

The surfactant s⁹ is a polymeric surfactant composed of a block copolymer or random copolymer of a hydrophilic monomer and a hydrocarbon-based hydrophobic monomer, or a hydrophobically modified product of a hydrophilic copolymer.

Examples of the surfactant s⁹ include a block or random copolymer of polyethylene glycol (meth)acrylate and a long-chain alkyl acrylate, a block or random copolymer of vinyl acetate and a long-chain alkyl vinyl ether, a block or random copolymer of vinyl acetate and a long-chain alkyl vinyl ester, a polymeric material of styrene and maleic anhydride, a condensate of polyvinyl alcohol and stearic acid, a condensate of polyvinyl alcohol and stearyl mercaptan, a condensate of polyallylamine and stearic acid, a condensate of polyethyleneimine and stearyl alcohol, methylcellulose, hydroxypropyl methylcellulose, and hydroxyethyl methylcellulose.

Examples of commercially available products of the surfactant s⁹ include MP Polymers (article numbers: MP-103, MP-203) manufactured by Kuraray Co., Ltd., SMA resins manufactured by Elf Atochem Inc., Metolose manufactured by Shin-Etsu Chemical Co., Ltd., and Epomin RP manufactured by Nippon Shokubai Co., Ltd.

As for the combination of surfactants, from the viewpoints of excellent water repellency and durability of the water repellent composition and stability of the obtained emulsion, a combination of the surfactant s¹, the surfactant s², and the surfactant s⁷, a combination of the surfactant s¹, the surfactant s³, and the surfactant s⁷, or a combination of the surfactant s¹, the surfactant s², the surfactant s³, and the surfactant s⁷ is preferred, and the above combination in which the surfactant s⁷ is the compound (s⁷¹) is more preferred. The total amount of surfactants is preferably from 1 to 10 parts by mass, and more preferably from 1 to 7 parts by mass, with respect to the polymer (100 parts by mass).

### (Molecular weight modifier)

As the molecular weight modifier, for example, an aromatic compound, a mercaptoalcohol, a mercaptocarboxylic acid or an alkyl mercaptan is preferred, and a mercaptocarboxylic acid or an alkyl mercaptan is more preferred. Examples of the molecular weight modifier include mercaptoethanol, mercaptopropionic acid, n-octyl mercaptan, n-dodecyl mercaptan, tert-dodecyl mercaptan, stearyl mercaptan, and α-methylstyrene dimer (CH₂=C(Ph)CH₂C(CH₃)₂Ph, where Ph is a phenyl group), and n-dodecyl mercaptan, tert-dodecyl mercaptan, or stearyl mercaptan is particularly preferred.

### (Polymerization initiator)

Examples of the polymerization initiator include a thermal polymerization initiator, a photopolymerization initiator, a radiation polymerization initiator, a radical polymerization initiator, and an ionic polymerization initiator, and a radical polymerization initiator is preferred. As the radical polymerization initiator, for example, an azo-based polymerization initiator, a peroxide-based polymerization initiator, or a redox-based initiator can be used depending on the polymerization temperature. As the radical polymerization initiator, an azo-based compound is preferred, and a salt of an azo-based compound is more preferred. Examples of the initiator include an acetic acid salt of 2,2'-azobis[2-(2-imidazolin-2-yl)propane] (VA-061, manufactured by Wako Pure Chemical Industries, Ltd.) and 2,2'-azobis(2-aminodinopropane) (NC-32, manufactured by Nippoh Chemicals Co., Ltd.). The polymerization temperature is preferably from 30 to 80°C.

### (Other components)

The water repellent composition of the present embodiment may contain other components, if necessary.

Examples of other components include a crosslinking agent, a penetrant, a defoamer, a water absorbent, an antistatic agent, an antistatic polymer, an anticrease agent, a texture adjuster, a film-forming aid, a water-soluble polymer (such as polyacrylamide or polyvinyl alcohol), a thermal curing agent (such as a melamine resin, a urethane resin, a triazine ring-containing compound or an isocyanate-based compound), an epoxy curing agent (such as isophthalic acid dihydrazide, adipic acid dihydrazide, sebacic acid dihydrazide, dodecanedioic acid dihydrazide, 1,6-hexamethylenebis(N,N-dimethylsemicarbazide), 1,1,1', 1'-tetramethyl-4,4'-(methylene-di-para-phenylene) disemicarbazide or spiroglycol), a heat curing catalyst, a crosslinking catalyst, a synthetic resin, a fiber stabilizer, and a fine inorganic particle.

The water repellent composition of the present embodiment may contain, if necessary, a polymer capable of exhibiting water repellency other than the polymer (A) of the present embodiment, a commercially available water repellent, a water repellent compound having no fluorine atom, or the like. Examples of the water repellent compound having no fluorine atom include a paraffin-based compound, an aliphatic amide-based compound, an alkylethylene urea compound, and a silicon-based compound.

When the present composition contains a crosslinking agent, adhesion to a base material is likely to be improved.

As the crosslinking agent, an isocyanate-based crosslinking agent, a methylol-based crosslinking agent, a carbodiimide-based crosslinking agent, and an oxazoline-based crosslinking agent are preferred.

As the isocyanate-based crosslinking agent, an isocyanate-based crosslinking agent having two or more isocyanate groups is preferred.

Examples of the isocyanate-based crosslinking agent include an aromatic block type isocyanate-based crosslinking agent, an aliphatic block type isocyanate-based crosslinking agent, an aromatic unblocked type isocyanate-based crosslinking agent, and an aliphatic unblocked type isocyanate-based crosslinking agent. The isocyanate-based crosslinking agent is preferably a water-dispersible type agent emulsified with a surfactant or a self-water-dispersible type agent having a hydrophilic group.

Examples of the methylol-based crosslinking agent include a condensate or precondensate of urea or melamine with formaldehyde, methylol-dihydroxyethylene-urea and a derivative thereof, methylol-ethylene-urea, methylol-propylene-urea, methyloltriazone, a dicyandiamide-formaldehyde condensate, methylol-carbamate, methylol-(meth)acrylamide, and a polymer thereof.

A carbodiimide-based crosslinking agent is a polymer having a carbodiimide group in the molecule, and is a crosslinking agent that exhibits excellent reactivity with a carboxy group, amino group, or active hydrogen group in an article or the like.

An oxazoline-based crosslinking agent is a polymer having an oxazoline group in the molecule, and is a crosslinking agent that exhibits excellent reactivity with a carboxy group in an article or the like.

Examples of other crosslinking agents include divinyl sulfone, a polyamide and a cationic derivative thereof, a polyamine and a cationic derivative thereof, an epoxy derivative of diglycidyl glycerol or the like, a halide derivative such as (epoxy-2,3-propyl)trimethylammonium chloride and N-methyl-N-(epoxy-2,3-propyl) morpholinium chloride, a pyridinium salt of chloromethyl ether of ethylene glycol, a polyamine-polyamide-epichlorohydrin resin, a polyvinyl alcohol and a derivative thereof, a polyacrylamide and a derivative thereof, and a glyoxal resin-based anticrease agent.

When the present composition contains a methylol-based crosslinking agent or a glyoxal resin-based anticrease agent, it is preferable to contain a catalyst as an additive. Examples of preferred catalysts include an inorganic amine salt and an organic amine salt. Examples of the inorganic amine salt include ammonium chloride. Examples of the organic amine salt include an amino alcohol hydrochloride and a semicarbazide hydrochloride. Examples of the amino alcohol hydrochloride include monoethanolamine hydrochloride, diethanolamine hydrochloride, triethanol hydrochloride, and 2-amino-2-methylpropanol hydrochloride.

### (Ratio of each component)

When the present composition contains a medium, the content of the medium can be appropriately selected in accordance with the desired solid content concentration of the present composition.

The solid content concentration of the present composition immediately after production of the present composition is preferably from 5 to 60% by mass, more preferably from 10 to 50% by mass, and still more preferably from 15 to 45% by mass.

The solid content concentration of the present composition in a case where the present composition is used for treating an article is preferably from 0.03 to 1.2% by mass, more preferably from 0.05 to 1.0% by mass, and still more preferably from 0.08 to 0.9% by mass.

It should be noted that the solid content concentration is the total content of the polymer (A) and the surfactant in the present composition.

The ratio of the polymer (A) with respect to the total mass of the present composition is preferably from 0.03 to 60% by mass, more preferably from 0.05 to 50% by mass, and still more preferably from 0.08 to 45% by mass.

When the present composition contains a surfactant, the content of the surfactant in the present composition is preferably from 1 to 10 parts by mass, more preferably from 1 to 8 parts by mass, and still more preferably from 2 to 7 parts by mass, with respect to 100 parts by mass of the polymer (A).

When the present composition contains a molecular weight modifier, the content of the molecular weight modifier in the present composition is preferably from 0.1 to 10 parts by mass, more preferably from 0.5 to 9 parts by mass, and still more preferably from 1 to 8 parts by mass, with respect to 100 parts by mass of the polymer (A).

When the present composition contains a polymerization initiator, the content of the polymerization initiator in the present composition is preferably from 0.01 to 5 parts by mass, more preferably from 0.05 to 4 parts by mass, and still more preferably from 0.1 to 3 parts by mass, with respect to 100 parts by mass of the polymer (A).

The content of fluorine atoms with respect to the total mass of the present composition is preferably 0.1% by mass or less, and more preferably 0% by mass. The content of fluorine atoms with respect to the total mass of the present composition can be measured by combustion ion chromatography or the like.

### <<Production method of non-fluorinated polymer>>

A method for producing a non-fluorinated polymer according to the present embodiment is a production method in which a mixture containing monomer components including the monomer (a), the monomer (b) and the monomer (c) is polymerized in the presence of a surfactant and a polymerization initiator. Further, a water repellent composition is also produced at the same time. With respect to the total mass of all monomers constituting the non-fluorinated polymer, the ratio of the monomer (a) is from 73 to 95% by mass, the ratio of the monomer (b) is from 1 to 12% by mass, and the ratio of the monomer (c) is from 0.5 to 15% by mass.

The monomer components may further contain either one or both of the monomer (d) and the monomer (e).

Those produced by known production methods can be used as the monomer (a), the monomer (b), the monomer (c), the monomer (d) and the monomer (e), respectively. If available, commercially available products can be used as monomers.

The total ratio of the monomer (a), the monomer (b) and the monomer (c) contained in the mixture with respect to the total mass of the monomers constituting the non-fluorinated polymer is preferably 80% by mass or more, more preferably from 80 to 99% by mass, and still more preferably from 82 to 98% by mass. When the total ratio of the monomer (a), the monomer (b) and the monomer (c) is equal to or more than the above lower limit value, the water repellency of the article treated with the present composition and the washing durability thereof are excellent.

When the monomer component contains either one or both of the monomer (d) and the monomer (e), the total ratio of the monomer (a), the monomer (b) and the monomer (c) contained in the mixture with respect to the total mass of the monomers constituting the non-fluorinated polymer is preferably 80% by mass or more, more preferably 85% by mass or more, still more preferably 90% by mass or more, and particularly preferably 95% by mass or more.

The ratio of the monomer (a) contained in the mixture with respect to the total mass of the monomers constituting the non-fluorinated polymer is from 73 to 95% by mass, preferably from 74 to 92% by mass, and more preferably from 75 to 90% by mass. The ratio of the monomer (a) with respect to the total mass of the monomer (a), the monomer (b) and the monomer (c) contained in the mixture is preferably from 73 to 95% by mass, more preferably from 75 to 95% by mass, and still more preferably from 78 to 94% by mass. When the ratio of the monomer (a) is equal to or more than the above lower limit value, the water repellency of the article treated with the present composition is further improved. When the ratio of the monomer (a) is equal to or less than the above upper limit value, the monomer (b) and the monomer (c) can be sufficiently contained, and the water repellency of the article treated with the present composition is further improved.

The ratio of the monomer (b) contained in the mixture with respect to the total mass of the monomers constituting the non-fluorinated polymer is from 1 to 12% by mass, preferably from 2 to 11% by mass, and more preferably from 3 to 10% by mass. The ratio of the monomer (b) with respect to the total mass of the monomer (a), the monomer (b) and the monomer (c) contained in the mixture is preferably from 1 to 12% by mass, more preferably from 2 to 11% by mass, and still more preferably from 3 to 10% by mass. When the ratio of the monomer (b) is equal to or more than the above lower limit value, the water repellency of the article treated with the present composition is further improved. When the ratio of the monomer (b) is equal to or less than the above upper limit value, the monomer (c) and the monomer (a) can be sufficiently contained, and the water repellency of the article treated with the present composition is further improved.

The ratio of the monomer (c) contained in the mixture with respect to the total mass of the monomers constituting the non-fluorinated polymer is from 0.5 to 15% by mass, preferably from 0.8 to 14% by mass, and more preferably from 1 to 13% by mass. The ratio of the monomer (c) with respect to the total mass of the monomer (a), the monomer (b) and the monomer (c) contained in the mixture is preferably from 1 to 15% by mass, more preferably from 1 to 14% by mass, and still more preferably from 1 to 10% by mass. When the ratio of the monomer (c) is equal to or more than the above lower limit value, the water repellency of the article treated with the present composition is further improved. When the ratio of the monomer (c) is equal to or less than the above upper limit value, the monomer (a) and the monomer (b) can be sufficiently contained, and the water repellency of the article treated with the present composition is further improved.

The total ratio of the monomer (a) and the monomer (b) contained in the mixture with respect to the total mass of the monomers constituting the non-fluorinated polymer is preferably 70% by mass or more, more preferably from 75 to 98% by mass, and still more preferably from 80 to 97% by mass. When the total ratio of the monomer (a) and the monomer (b) is equal to or more than the above lower limit value, the water repellency of the article treated with the present composition is further improved. When the total ratio of the monomer (a) and the monomer (b) is equal to or less than the above upper limit value, the monomer (c) can be sufficiently contained, and the water repellency of the article treated with the present composition is further improved.

The total ratio of the monomer (b) and the monomer (c) contained in the mixture with respect to the total mass of the monomers constituting the non-fluorinated polymer is preferably from 4 to 30% by mass, more preferably from 5 to 25% by mass, and still more preferably from 6 to 22% by mass. When the total ratio of the monomer (b) and the monomer (c) is equal to or more than the above lower limit value, the water repellency of the article treated with the present composition is further improved. When the total ratio of the monomer (b) and the monomer (c) is equal to or less than the above upper limit value, the monomer (a) can be sufficiently contained, and the water repellency of the article treated with the present composition is further improved.

The total ratio of the monomer (c) and the monomer (a) contained in the mixture with respect to the total mass of the monomers constituting the non-fluorinated polymer is preferably from 50.1 to 95% by mass, more preferably from 55 to 90% by mass, and still more preferably from 60 to 90% by mass. When the total ratio of the monomer (c) and the monomer (a) is equal to or more than the above lower limit value, the water repellency of the article treated with the present composition is further improved. When the total ratio of the monomer (c) and the monomer (a) is equal to or less than the above upper limit value, the monomer (b) can be sufficiently contained, and the water repellency of the article treated with the present composition is further improved.

The mass ratio of monomer (a)/monomer (b) contained in the mixture is preferably from 1.5 to 25, more preferably from 2.0 to 24, and still more preferably from 3.0 to 23. When the mass ratio of monomer (a)/monomer (b) is equal to or more than the above lower limit value, the water repellency of the article treated with the present composition is further improved. When the mass ratio of monomer (a)/monomer (b) is equal to or less than the above upper limit value, polymerization of the monomer components proceeds easily during the production of the polymer (A).

The mass ratio of monomer (b)/monomer (c) contained in the mixture is preferably from 0.6 to 15, more preferably from 0.7 to 13, and still more preferably from 0.8 to 12. When the mass ratio of monomer (b)/monomer (c) is equal to or more than the above lower limit value, the water repellency of the article treated with the present composition is further improved. When the mass ratio of monomer (b)/monomer (c) is equal to or less than the above upper limit value, polymerization of the monomer components proceeds easily during the production of the polymer (A).

The mass ratio of monomer (c)/monomer (a) contained in the mixture is preferably from 0.001 to 0.4, more preferably from 0.005 to 0.27, and still more preferably from 0.010 to 0.17. When the mass ratio of monomer (c)/monomer (a) is equal to or more than the above lower limit value, the water repellency of the article treated with the present composition is further improved. When the mass ratio of monomer (c)/monomer (a) is equal to or less than the above upper limit value, polymerization of the monomer components proceeds easily during the production of the polymer (A).

The mass ratio of (monomer (a) + monomer (b))/monomer (c) contained in the mixture is preferably from 1.0 to 120, more preferably from 1.5 to 110, and still more preferably from 2.0 to 100. When the mass ratio of (monomer (a) + monomer (b))/monomer (c) is equal to or more than the above lower limit value, the water repellency of the article treated with the present composition is further improved. When the mass ratio of (monomer (a) + monomer (b))/monomer (c) is equal to or less than the above upper limit value, polymerization of the monomer components proceeds easily during the production of the polymer (A).

When the mixture contains the monomer (d), the ratio of the monomer (d) with respect to the total mass of the monomer components contained in the mixture with respect to the total mass of the monomers constituting the non-fluorinated polymer is preferably from 0.1 to 15% by mass, more preferably from 0.2 to 10% by mass, and still more preferably from 0.5 to 6% by mass.

When the mixture contains the monomer (e), the ratio of the monomer (e) with respect to the total mass of the monomer components contained in the mixture with respect to the total mass of the monomers constituting the non-fluorinated polymer is preferably from 0.1 to 15% by mass, more preferably from 0.2 to 10% by mass, and still more preferably from 0.5 to 6% by mass.

When the mixture contains the monomer (d) or the monomer (e), the total ratio of the monomer (d) and the monomer (e) contained in the mixture with respect to the total mass of the monomers constituting the non-fluorinated polymer with respect to the total mass of the monomers constituting the non-fluorinated polymer is preferably from 0.2 to 30% by mass, more preferably from 0.4 to 20% by mass, and still more preferably from 1 to 12% by mass.

Examples of a method for polymerizing the monomer components include an emulsion polymerization method, a solution polymerization method, a suspension polymerization method, and a bulk polymerization method. Among these, an emulsion polymerization method is preferred. By polymerizing the monomer components by an emulsion polymerization method, the molecular weights (Mn, Mw) of the polymer (A) can be increased.

In the emulsion polymerization method, for example, in an emulsion containing a medium, a monomer component, a surfactant, and a polymerization initiator, the monomer component is polymerized. The emulsion may contain a molecular weight modifier, if necessary.

Examples of the medium, the surfactant, the polymerization initiator and the molecular weight modifier include the same as those described above.

The ratio of the above molecular weight modifier with respect to 100 parts by mass of all monomers constituting the non-fluorinated polymer is preferably from 0.1 to 20 parts by mass, more preferably from 0.1 to 10 parts by mass, and still more preferably from 0.1 to 5 parts by mass.

The emulsion can be prepared by mixing the medium, the monomer component, and, if necessary, a surfactant, dispersing the resulting mixture with a homogenizer, a high-pressure emulsifier, or the like, and then adding a polymerization initiator. It should be noted that when the monomer components are gaseous, they can be added to the reaction system after the above dispersion.

The concentration of the monomer components in the emulsion is preferably from 5 to 60% by mass, and more preferably from 10 to 50% by mass. When the concentration of the monomer components in the emulsion is within the above range, the molecular weight of the polymer (A) can be made sufficiently high.

The content of the surfactant in the emulsion is preferably from 0.1 to 10 parts by mass with respect to 100 parts by mass of the monomer component. When the content of the surfactant is equal to or more than the above lower limit value, the dispersion stability of the emulsion is excellent. When the content of the surfactant is equal to or less than the above upper limit value, the adverse effects due to the surfactant on the water repellency of the article treated with the composition containing the polymer (A) can be reduced.

The content of the polymerization initiator in the emulsion is preferably from 0.01 to 5 parts by mass with respect to 100 parts by mass of the monomer component. When the content of the polymerization initiator is equal to or more than the above lower limit value, the reaction rate is likely to be high and the polymerization yield is likely to be improved. When the content of the polymerization initiator is equal to or less than the above upper limit value, a polymer having a molecular weight in the desired range is likely to be obtained.

A dispersion of the polymer (A) can be obtained by polymerizing the monomer component in the emulsion.

In the dispersion, the polymer (A) is dispersed as emulsified particles in an aqueous medium.

In the dispersion, the average particle size of emulsified particles of the polymer (A) is preferably from 10 to 1,000 nm, more preferably from 30 to 600 nm, and still more preferably from 50 to 300 nm. When the average particle size is equal to or less than the above upper limit value, the water repellency of the article treated with the emulsified particles of the polymer (A) and the dispersibility of the emulsified particles of the polymer (A) are further improved. When the average particle size is equal to or more than the above lower limit value, the emulsified particles of the polymer (A) are more stable against mechanical shear forces.

The average particle size of the emulsified particles of the polymer (A) is calculated by the cumulant analysis method from the autocorrelation function obtained by the dynamic light scattering method for a sample obtained by diluting the dispersion of the polymer (A) with water to a solid content concentration of 1% by mass.

The dispersion of the polymer (A) obtained by polymerizing the monomer component in the emulsion may be used as it is as the present composition, or may be used as the present composition after diluting with an aqueous medium to adjust the solid content concentration. Other components may be further added to the present composition.

### <Treatment method of water repellent composition>

A treatment method of the present embodiment is a treatment method using the present composition. Any method may be used as long as the present composition can be adhered to an article to be treated, and for example, when the present composition contains a liquid medium, a method of treating the article with the present dispersion by a known method such as coating, impregnation, immersion, spraying, brushing, padding, size press coating, and roll coating, followed by drying can be mentioned.

The amount of solid content in the water repellent composition to be adhered to the article to be treated is not particularly limited, but in the case of a fiber fabric, for example, it is preferably from 0.1 to 5 g, more preferably from 0.1 to 3 g, and still more preferably from 0.1 to 1 g, per 100 g of the fiber fabric.

The amount of the polymer (A) in the water repellent composition to be adhered to the article to be treated is not particularly limited, but in the case of a fiber fabric, for example, it is preferably from 0.01 to 5 g, more preferably from 0.02 to 3 g, and still more preferably from 0.03 to 1 g, per 100 g of the fiber fabric.

The drying may be performed at room temperature or by heating, and is preferably performed by heating. When heating is performed, the heating temperature is preferably from 90 to 200°C. Further, when the water repellent composition contains a crosslinking agent, it is preferable to cure by heating to a temperature equal to or higher than the crosslinking temperature of the crosslinking agent, if necessary.

### <Article>

The article of the present embodiment is an article treated with the present composition.

Examples of the article to be treated with the present composition include fibers, fiber fabrics (such as fiber woven fabrics, fiber knitted fabrics, nonwoven fabrics, and raised fabrics), textile products provided with fiber fabrics (such as clothing including ski wear, rainwear, coats, blousons, windbreakers, down jackets, sportswear, work clothing, uniforms, and protective clothing, backpacks, bags, and tents), glass, paper, wood, leather, artificial leather, stone, concrete, ceramics, metals, metal oxides, ceramic products, resin molded products, and porous resins. The porous resins are used, for example, as filters. Examples of materials for the porous resins include polypropylene, polyethylene terephthalate, and polytetrafluoroethylene.

The article to be treated is preferably a fiber, a fiber fabric, or a textile product provided with a fiber fabric. Although the type of the fiber is not particularly limited, examples thereof include natural fibers such as cotton, wool, silk, or cellulose; chemical fibers such as polyester, polyamide, acrylic, aramid, rayon, or lyocell; and fibers obtained by using a plurality of these fibers. When a fiber substrate is a nonwoven fabric, examples of the fiber include polyethylene, polypropylene, polyolefin, polyethylene terephthalate, polytetrafluoroethylene, glass, and rayon.

Although the thickness of the fiber fabric is not particularly limited, it is from 10 µm to 5 cm.

### (Mechanism of action)

In the present composition described above, since the polymer (A) includes the unit (a), the unit (b), and the unit (c), the article treated with the present composition exhibits excellent water repellency and durability. In particular, even when the content of the non-fluorinated polymer in the water repellent composition is low, favorable water repellency and durability are exhibited. The following mechanism is thought to be the reason for this. It is conceivable that since the polymer (A) contains the unit (b), the adhesiveness to the article to be treated improves, thereby improving durability. Furthermore, it is thought that a fine water repellent film is easily formed on the surface of the article, and the water repellency is also improved. It is believed that when the ratio of the unit (b) is 12% by mass or less, the water repellent film hardly becomes hydrophilic, which improves the water repellency. It is thought that the inclusion of the unit (c) in the polymer (A) improves the water slidability of the above water repellent film, thereby improving the water repellency. In particular, it is believed that when the molecular weight of the monomer (c) is 1,000 or more, the unit (c) is easily exposed on the surface of the above water repellent film, thereby improving the water repellency. In addition, it is considered that when the molecular weight of the monomer (c) is 3,600 or less, the viscosity of a polysiloxane moiety of the unit (c) exposed on the surface of the water repellent film to exhibit water slidability does not become too high. As a result, it is believed that the viscosity of the polymer (A) does not become too high, and the water slidability of the above water repellent film is improved, thereby improving the water repellency.

### Examples

Hereinafter, the present invention will be described in detail with reference to Examples, but the present invention is not limited thereto. Cases 1 to 13 are Examples of the present invention, and Cases 14 to 41 are Comparative Examples.

### <Ratios of monomer units>

The composition of a polymer (ratio of each monomer unit with respect to all the units constituting the polymer) was calculated based on the amount of monomer component charged.

### <Water repellent finishing of fabric: low concentration>

An emulsion obtained in a Case described below was diluted with distilled water to adjust the solid content concentration to 0.2% by mass, and then a blocked isocyanate serving as a crosslinking agent (Meikanate TP-10, manufactured by Meisei Chemical Works, Ltd.) was added as an auxiliary used in combination to a concentration of 1.5% by mass to prepare a water repellent composition. A dyed nylon fabric was immersed in this water repellent composition and squeezed so that the content of the water repellent composition with respect to the total mass of the water repellent composition and the dyed nylon fabric was 60% by mass. The resulting fabric was dried at 110°C for 90 seconds, and then further subjected to a heat treatment at 170°C for 60 seconds to obtain a test fabric (low concentration).

### <Water repellent finishing of fabric: high concentration>

An emulsion obtained in a Case described below was diluted with distilled water to adjust the solid content concentration to 1.5% by mass, and then a blocked isocyanate serving as a crosslinking agent (Meikanate TP-10, manufactured by Meisei Chemical Works, Ltd.) was added as an auxiliary used in combination to a concentration of 1.5% by mass to prepare a water repellent composition. A dyed nylon fabric was immersed in this water repellent composition and squeezed so that the content of the water repellent composition with respect to the total mass of the water repellent composition and the dyed nylon fabric was 60% by mass. The resulting fabric was dried at 110°C for 90 seconds, and then further subjected to a heat treatment at 170°C for 60 seconds to obtain a test fabric (high concentration).

### <Water repellency evaluation (initial stage)>

The test fabric (low concentration) and the test fabric (high concentration) were evaluated for water repellency in accordance with a spraying test of JIS L1092-2009. The water repellency was expressed in five grades from 1 to 5. The higher the score, the better the water repellency. A grade marked with a symbol of + (or -) indicates that the respective properties are slightly better (or worse) than the standard level of the above grade.

### <Water repellency evaluation (after washing)>

The test fabric (low concentration) and the test fabric (high concentration) were repeatedly washed 20 times in accordance with a washing method of JIS L0217, Appended Table 103. After washing, the water repellency described above was evaluated following air drying overnight in a room at a room temperature of 25°C and a humidity of 60%.

### <Overall evaluation>

For the five grades from 1 to 5, 0.2 was added for each symbol of + (e.g., 3+ = 3.2) and 0.2 was subtracted for each symbol of - (e.g., 3- = 2.8), and the total of the water repellency evaluation (initial stage) and the water repellency evaluation (after washing) was used as the overall evaluation.

The names of the compounds described in the present specification are as follows.

### Monomer (a):

StA: stearyl acrylate
BeA: behenyl acrylate

### Monomer (b):

VdCl: vinylidene chloride
VCM: vinyl chloride

### Monomer (c):

Silicone monomer 1: single end methacrylic modified silicone (number average molecular weight: 2,300, X-22-174BX manufactured by Shin-Etsu Silicone Co., Ltd.)
Silicone monomer 2: dual end methacrylic modified silicone (number average molecular weight: 2,370, X-22-164C manufactured by Shin-Etsu Silicone Co., Ltd.)
Silicone monomer 3: dual end methacrylic modified silicone (number average molecular weight: 3,200): synthesized by a method described in Japanese Unexamined

Patent Application, First Publication No. 59-78263.

### Monomer (c'):

Silicone monomer 4: single end methacrylic modified silicone (number average molecular weight: 900, X-22-174ASX manufactured by Shin-Etsu Silicone Co., Ltd.)
Silicone monomer 5: single end methacrylic modified silicone (number average molecular weight: 4,600, KF-2012 manufactured by Shin-Etsu Silicone Co., Ltd.)
Silicone monomer 6: single end methacrylic modified silicone (number average molecular weight: 12,000, X-22-2426 manufactured by Shin-Etsu Silicone Co., Ltd.)
Silicone monomer 7: dual end methacrylic modified silicone (number average molecular weight: 3,900, X-22-164E manufactured by Shin-Etsu Silicone Co., Ltd.)

### Monomer (d):

MOI-BP: 3,5-dimethylpyrazole adduct of isocyanatoethyl acrylate

### Monomer (e):

DMAA: dimethylacrylamide
NMAM: N-methylolacrylamide

### Surfactant:

E420: polyoxyethylene oleyl ether (Emulgen 420 (product name) manufactured by Kao Corporation, approximately 13 moles of ethylene oxide adduct)
P204: 10% by mass aqueous solution of ethylene oxide-propylene oxide polymer (Plonon 204 (product name) manufactured by NOF Corporation, ethylene oxide ratio: 40% by mass)
AQ-18-63: solution of stearyl trimethylammonium chloride (63%), isopropanol (32%), and water (5%) (manufactured by Lion Specialty Chemicals Co., Ltd.)
SmOA: sorbitan monooleate
PELE: polyoxyethylene lauryl ether
PEtDE: polyoxyethylene tridecyl ether
dODACl: dioctadecyl ammonium chloride

### Molecular weight modifier:

LSH: lauryl mercaptan
StSH: stearyl mercaptan

### Polymerization initiator:

VA-061A: acetic acid salt of 2,2'-azobis[2-(2-imidazolin-2-yl)propane] (VA-061 manufactured by Wako Pure Chemical Industries, Ltd.)
AMPD: 2,2'-azobis(2-amidinopropane) (NC-32, manufactured by Nippoh Chemicals Co., Ltd.)

### Medium:

DPG: dipropylene glycol
TPG: tripropylene glycol
Water

### (Case 1)

### <Production of polymer emulsion>

29.8 g of StA, 58.7 g of BeA, 2.0 g of MOI-BP, 2 g of DMAA, 3.0 g of silicone monomer 1, 1.0 g of StSH, 2.5 g of E420, 0.5 g of P-204, 0.5 g of AQ-18-63, 30 g of DPG, and 155 g of water were placed in a glass beaker and heated at 60°C for 30 minutes, and then mixed using a homomixer (BIO MIXER manufactured by Nihonseiki Kaisha, Ltd.) to obtain a mixed liquid. The above mixed liquid was treated at 40 MPa, while being kept at 60°C, using a high-pressure emulsifier (Mini-lab manufactured by APV Rannie), to obtain an emulsion. This emulsion was placed in a stainless steel reactor and cooled to 40°C or lower. Subsequently, 4.5 g of VdCl and 0.5 g of VA-061A were added thereto, and after replacing the gas phase with nitrogen, a polymerization reaction was carried out at 60°C for 15 hours while stirring to obtain a polymer emulsion. The obtained emulsion was used to carry out the above-mentioned water repellency evaluation (initial stage) and water repellency evaluation (after washing). The results are shown in Table 1.

### (Cases 2, 4, 6 to 17, 19, 21 to 24, 26 to 34, 36, 37)

A polymer emulsion was obtained in the same manner as in Case 1, with the exception that the monomers (a) to (e), surfactants, molecular weight modifiers, polymerization initiators, and media shown in Tables 1 to 3 were used and the charging ratios were changed to those shown in Tables 1 to 3. It should be noted that the charging ratios in Tables 1 to 3 refer to parts by mass. The obtained emulsion was used to carry out the above-mentioned water repellency evaluation (initial stage) and water repellency evaluation (after washing). The results are shown in Tables 1 to 3.

### (Case 3)

29.8 g of StA, 58.7 g of BeA, 2.0 g of MOI-BP, 2 g of DMAA, 3.0 g of silicone monomer 1, 1.0 g of StSH, 2.5 g of E420, 0.5 g of P-204, 0.5 g of AQ-18-63, 30 g of DPG, and 155 g of water were placed in a glass beaker and heated at 60°C for 30 minutes, and then mixed using a homomixer (BIO MIXER manufactured by Nihonseiki Kaisha, Ltd.) to obtain a mixed liquid.

The above mixed liquid was treated at 40 MPa, while being kept at 60°C, using a high-pressure emulsifier (Mini-lab manufactured by APV Rannie), to obtain an emulsion. This emulsion was placed in a stainless steel reactor and cooled to 40°C or lower. 0.5 g of VA-061A was added thereto, and after replacing the gas phase with nitrogen, 9.6 g of VCM was introduced and a polymerization reaction was carried out at 60°C for 15 hours while stirring to obtain a polymer emulsion. The obtained emulsion was used to carry out the above-mentioned water repellency evaluation (initial stage) and water repellency evaluation (after washing). The results are shown in Table 1.

### (Cases 5, 18, 20, 25, 35, 38 to 41)

A polymer emulsion was obtained in the same manner as in Case 3, with the exception that the monomers (a) to (e), surfactants, molecular weight modifiers, polymerization initiators, and media shown in Tables 1 to 3 were used and the charging ratios were changed to those shown in Tables 1 to 3. The obtained emulsion was used to carry out the above-mentioned water repellency evaluation (initial stage) and water repellency evaluation (after washing). The results are shown in Tables 1 to 3.

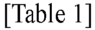

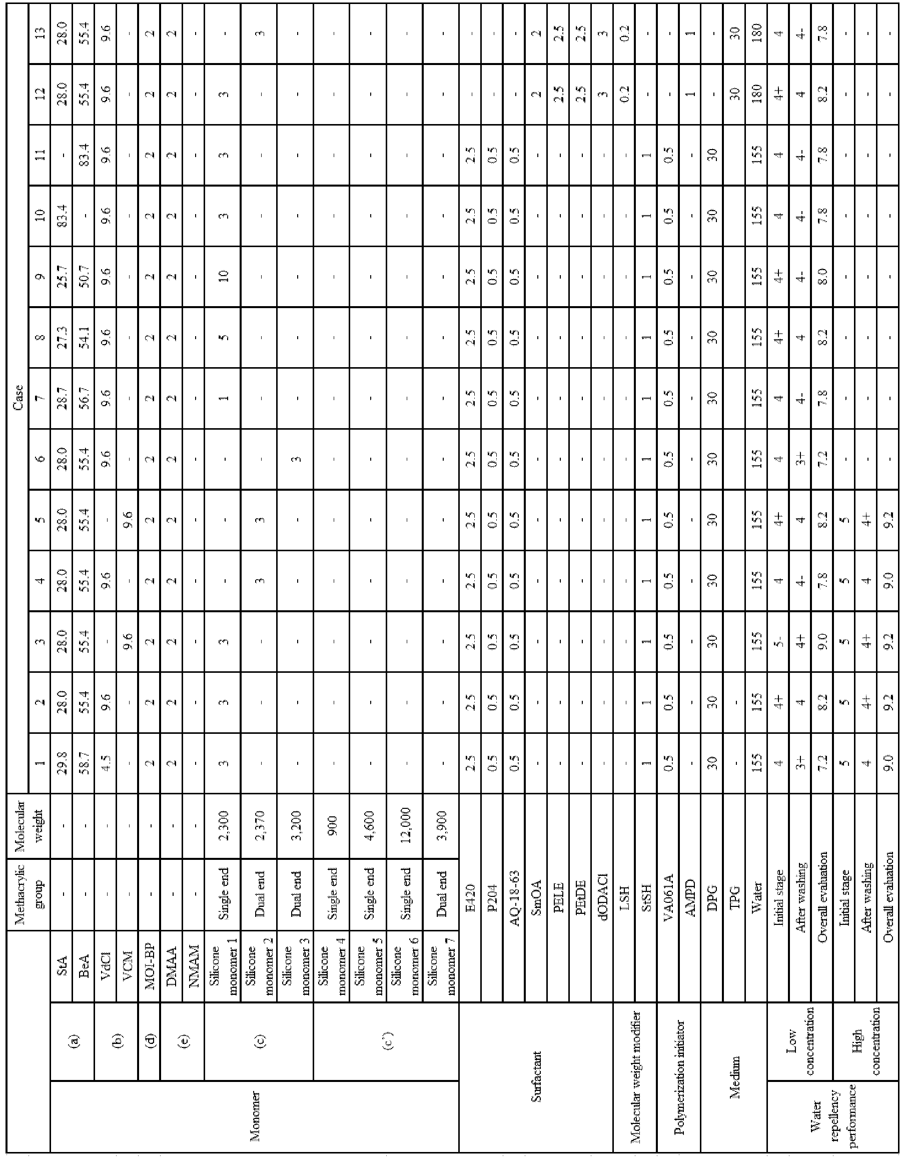

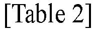

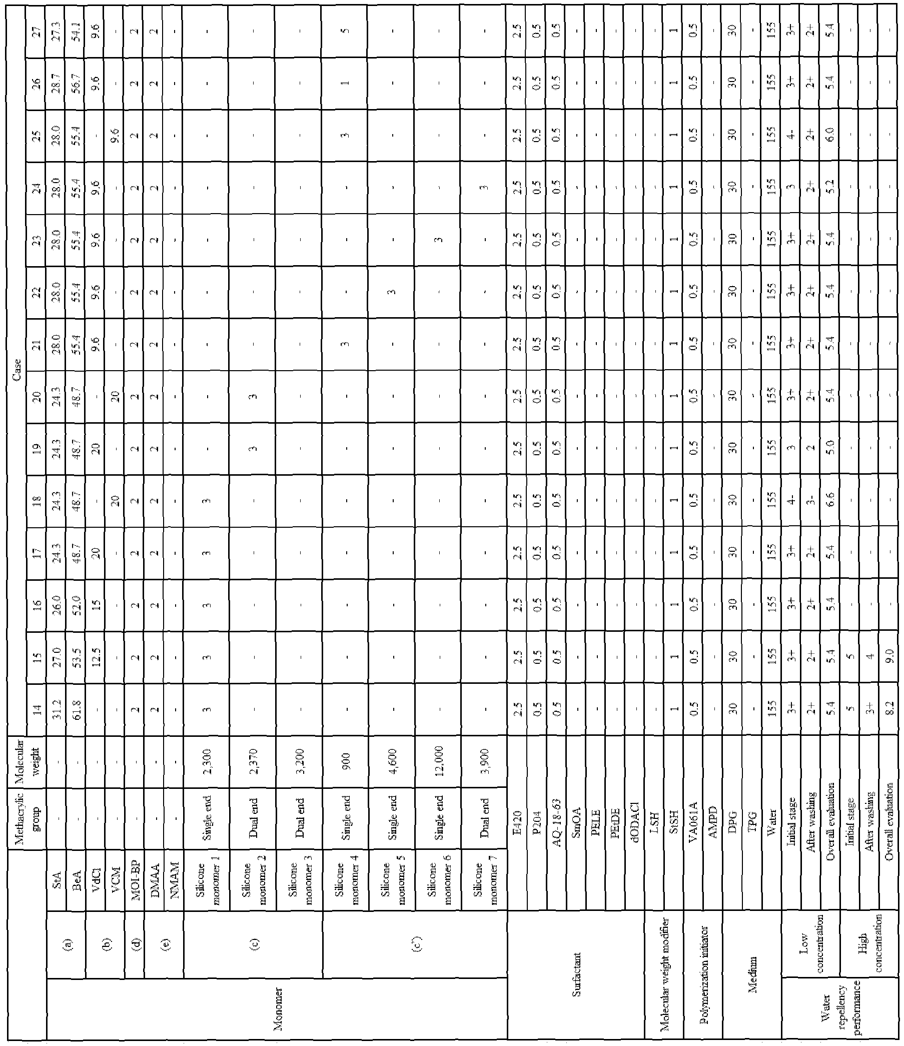

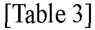

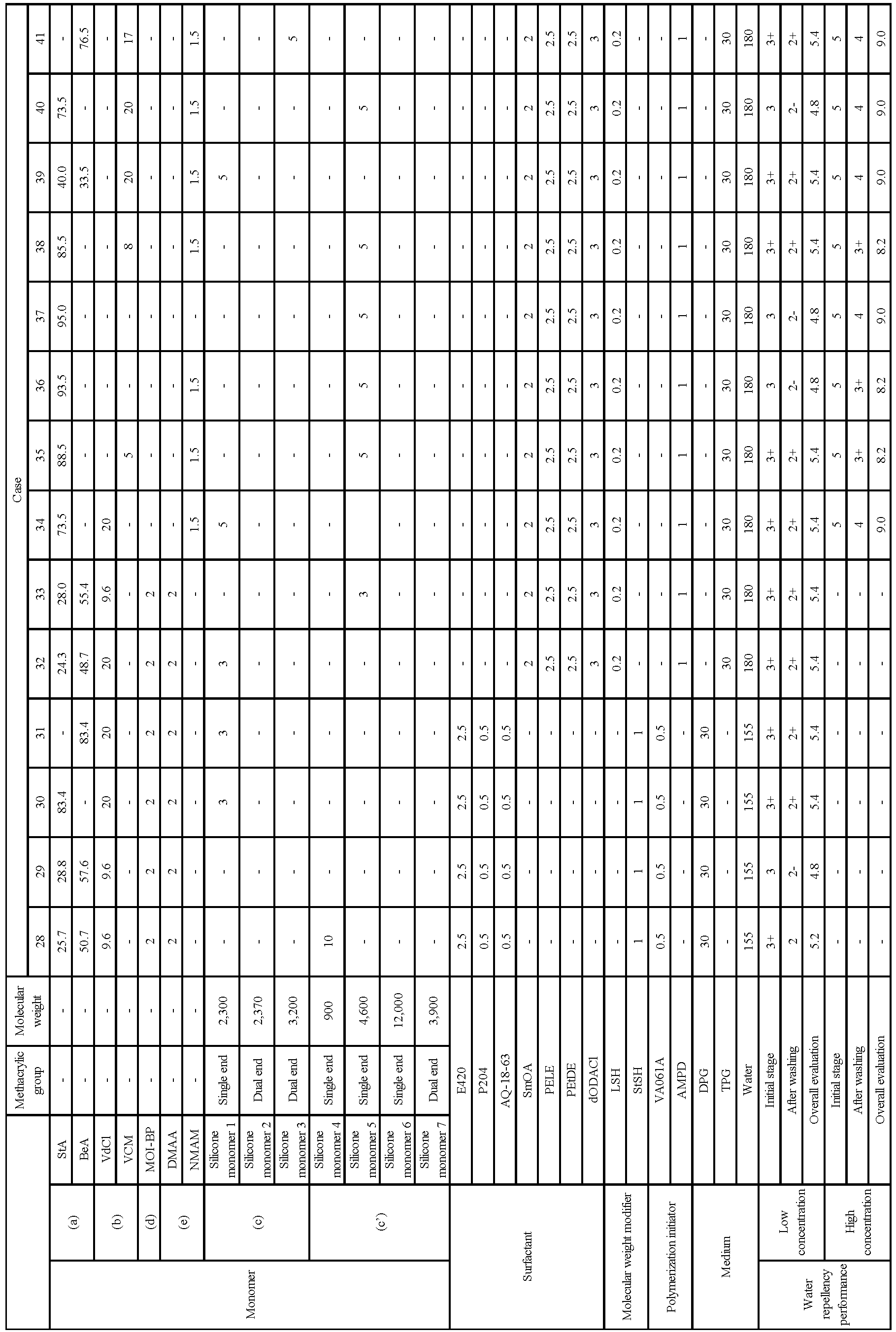

In Cases 1 to 13 in which the monomers (a), (b), and (c) were used, and the ratio of the structural units based on the monomer (b) with respect to the total amount of the structural units of the non-fluorinated polymer was from 1 to 12% by mass, favorable water repellency and durability were exhibited even when the content of the non-fluorinated polymer in the water repellent composition was low (low concentration). In Case 14 in which the monomer (b) was not used, and Cases 36 and 37 in which the monomers (b) and (c) were not used, the water repellency and durability were low when the content of the non-fluorinated polymer in the water repellent composition was low (low concentration). In Case 40 in which the ratio of the structural units based on the monomer (b) with respect to the total amount of the structural units of the non-fluorinated polymer exceeded 12% by mass, and the monomer (c) was not used, the water repellency and durability were low when the content of the non-fluorinated polymer in the water repellent composition was low (low concentration). In Cases 15 to 20, 30 to 32, 34, 39, and 41 in which the monomer (b) was not used or the ratio of the structural units based on the monomer (b) with respect to the total amount of the structural units of the non-fluorinated polymer exceeded 12% by mass, the water repellency and durability were low when the content of the non-fluorinated polymer in the water repellent composition was low (low concentration). In Cases 21 to 29, 33, 35, and 38 in which the monomer (c) was not used, the water repellency and durability were low when the content of the non-fluorinated polymer in the water repellent composition was low (low concentration).

## Claims

1. A water repellent composition comprising:
a non-fluorinated polymer having a structural unit based on a long-chain alkyl (meth)acrylate monomer;
a structural unit based on a vinyl halide monomer; and
a structural unit based on a (meth)acrylate monomer having a polysiloxane structure,
wherein a molecular weight of said (meth)acrylate monomer having a polysiloxane structure is from 1,000 to 3,600, and
a ratio of the structural unit based on the vinyl halide monomer with respect to a total amount of structural units of said non-fluorinated polymer is from 1 to 12% by mass.

2. The water repellent composition according to Claim 1,
wherein a total ratio of said structural unit based on a long-chain alkyl (meth)acrylate monomer, said structural unit based on a vinyl halide monomer, and said structural unit based on a (meth)acrylate monomer having a polysiloxane structure with respect to a total amount of structural units of said non-fluorinated polymer is 80% by mass or more.

3. The water repellent composition according to Claim 1, wherein said vinyl halide monomer is vinyl chloride or vinylidene chloride.

4. The water repellent composition according to Claim 1,
wherein said (meth)acrylate monomer having a polysiloxane structure is represented by the following formula (1) or the following formula (2):
R¹-(Si(R²)₂O)ₘ-Si(R²)₂-R³OC(=O)CR⁴=CH₂ (1)
wherein R¹ represents a monovalent hydrocarbon group having 1 to 12 carbon atoms, R² represents H or CH₃, R³ represents a divalent hydrocarbon group having 1 to 6 carbon atoms, R⁴ represents H, CH₃ or a chlorine atom, m represents an integer of 8 to 55, and a plurality of R² groups may be the same or different;
CH₂=CR⁵C(=O)OR⁶-(Si(R⁷)₂O)ₙ-Si(R⁷)₂-R⁶OC(=O)CR⁵=CH2 (2)
wherein R⁵ represents H, CH₃ or a chlorine atom, R⁶ represents a divalent hydrocarbon group having 1 to 6 carbon atoms, R⁷ represents H or CH₃, n represents an integer of 8 to 55, a plurality of R⁵ groups may be the same or different, a plurality of R⁶ groups may be the same or different, and a plurality of R⁷ groups may be the same or different.

5. The water repellent composition according to Claim 1,
wherein said long-chain alkyl (meth)acrylate monomer is represented by the following formula (3):
R⁹-OC(=O)CR⁸=CH₂ (3)
wherein R⁸ represents H, CH₃ or a chlorine atom, and R⁹ represents an alkyl group having 12 to 30 carbon atoms.

6. The water repellent composition according to Claim 5,
wherein said structural unit based on a long-chain alkyl (meth)acrylate monomer includes a structural unit based on a long-chain alkyl (meth)acrylate monomer in which R⁹ in said formula (3) has 12 to 18 carbon atoms, and a structural unit based on a long-chain alkyl (meth)acrylate monomer in which R⁹ in said formula (3) has 19 to 30 carbon atoms.

7. The water repellent composition according to Claim 6,
wherein a total ratio of the structural unit based on a long-chain alkyl (meth)acrylate monomer in which R⁹ in said formula (3) has 19 to 30 carbon atoms with respect to a total amount of said structural unit based on a long-chain alkyl (meth)acrylate monomer is from 50 to 99% by mass.

8. The water repellent composition according to Claim 1, wherein said non-fluorinated polymer further includes a structural unit based on a crosslinkable monomer.

9. A method for producing a non-fluorinated polymer,
the method comprising polymerizing a mixture containing a long-chain alkyl (meth)acrylate monomer, a vinyl halide monomer, and a (meth)acrylate monomer having a polysiloxane structure in the presence of a surfactant and a polymerization initiator,
wherein a ratio of said long-chain alkyl (meth)acrylate monomer is from 73 to 95% by mass, a ratio of said vinyl halide monomer is from 1 to 12% by mass, and a ratio of said (meth)acrylate monomer having a polysiloxane structure is from 0.5 to 15% by mass, with respect to a total mass of all monomers constituting said non-fluorinated polymer.

10. A treatment method using the water repellent composition according to any one of Claims 1 to 8.

11. An article treated using the water repellent composition according to any one of Claims 1 to 8.
